# EUROPEAN PATENT SPECIFICATION

(11) **EP 2 480 393 B1**
(45) Date of publication and mention of the grant of the patent: **07.11.2018**
(21) Application number: 10819523.1
(22) Date of filing: 24.09.2010
(51) Int. Cl.: B01F 11/00, B01F 3/04, B29C 44/18, B31D 5/00, B29C 44/34

(54) **MACHINE FOR PRODUCING FOAM WITHIN A BAG**
MASCHINE ZUR HERSTELLUNG EINES SCHAUMSTOFFS IN EINEM BEUTEL
MACHINE DESTINÉE À PRODUIRE DE LA MOUSSE À L'INTÉRIEUR D'UN SAC

(30) Priority: 24.09.2009 US 277411 P
(43) Date of publication of application: 01.08.2012
(73) Proprietor: Sealed Air Corporation (US), Charlotte, NC 28208 (US)
(72) Inventor: GRAY, William, M., West Redding CT 06896 (US); GARCEAU, Mark, Bethlehem CT 06751 (US); CORRIGAN, John, J., Washington CT 06793 (US)
(74) Representative: Uexküll & Stolberg
(86) International application number: PCT/US2010/050177
(87) International publication number: WO 2011/038212

(56) References cited:
- WO-A1-97/48606
- WO-A1-2008/003696
- GB-A- 1 402 538
- US-B1- 6 289 649
- US-B1- 6 386 850
- US-B1- 6 386 850
- US-B1- 6 586 074
- US-B2- 6 550 229

## Description

The present invention relates to a machine for producing foam in a bag.

### BACKGROUND

Polyurethane foam may be formed by mixing an isocyanate compound with a hydroxyl-containing material, such as a polyol (i.e., a compound that contains multiple hydroxyl groups), typically in the presence of water and a catalyst. As the isocyanate and polyol foam precursors react in the presence of the catalyst to form polyurethane, the water reacts with isocyanate to produce carbon dioxide gas, which acts as a blowing or foaming agent to expand the polyurethane into a foamed cellular structure (i.e., a polyurethane foam).

With foam-in-bag packaging, the foam precursors may be mixed and dispensed into flexible plastic bags, for example, as the bags are formed from plastic film. As the precursors react to form expanding foam within the bag, the bag may be sealed closed. The bag may then be placed into a box holding an object to be cushioned. The foam tends to expand within the bag into the available space inside the box to form a custom foam cushions around the packaged object. Machines for producing foam-in-bag cushions are described, for example, in U.S. Patents 4,800,708; 4,854,109; 5,376,219; 5,727,370; 6,003,288; 6,550,229; and 6,675,557; and such machines are available, for example, from Sealed Air Corporation under the Instapak®, SpeedyPacker Insight®, and Instapacker® trademarks.

Machines that produce foam-in-bag packaging may use a dispenser in which foam precursors enter the dispenser to mix with one another in an internal mixing chamber of the dispenser to form a foamable composition. The resultant foamable composition then exits the dispenser via a discharge outlet. See for example, U.S. Patents 4,898,327 and 5,255, 847.

Polyurethane foam tends to stick to objects as it hardens into foam. This tendency may be problematic inside the dispenser from which the mixed foam precursors are ejected. Therefore, the polyol and isocyanate foam precursors may be withheld from mixing with one another until just before injection from the dispenser. Nevertheless, over time the foamable composition may build up in the internal mixing chamber and the discharge outlet of the dispenser, harden into foam, and disrupt the desired operation. Foam build-up may also form on the end of the nozzle and protrude below the nozzle.

As a result, the mixing chamber and discharge outlet of an injector may require frequent cleaning. The dispenser may be cleaned by a solvent capable of dissolving both the foam precursors and the foamable composition before its fully cured state. To avoid frequent disassembly and manual cleaning of the dispenser, the solvent may be supplied to the discharge end of the dispenser to clean the dispenser on an on-going basis. See, for example, U.S. Patents 6,811,059; 6,929,193; and 6,996,956; and U.S. Patent Application Publications 2009/0038270 A1 and 2002/0092278 A1.

There are challenges presented by the use of a solvent in this manner. The supplying of the solvent to the dispenser adds to the operational expense and complexity of foam-in-bag packaging systems. Further, excess solvent that may flow from the dispenser into the next cushion to be formed may also leak through incomplete seals or vent holes in the bag or film containing the foam. Such solvent leakage may be detrimental to the surface appearance of certain types of packaged items, for example, comprising wood.

### SUMMARY

The presently disclosed subject matter may address one or more of the aforementioned problems.

An embodiment is directed to a machine useful for mixing first and second foam precursors to produce foam within a bag comprises a base and a shell. The base and shell are moveable relative each other between a base/shell disengaged position and a base/shell engaged position. In the base/shell disengaged position, the base and shell are spaced apart to permit insertion of the bag between the base and shell. In the base/shell engaged position, the shell and base press together to hold the bag between the base and shell and to divide the bag into (1) a mixing chamber and (2) a remainder portion so that the mixing chamber is isolated from the remainder portion of the bag. A first nozzle is adapted to inject the first foam precursor into the mixing chamber within the bag. A second nozzle adapted to inject the second foam precursor into the mixing chamber within the bag. A mixer is adapted to engage the mixing chamber of the bag to provide mixing energy to the first and second foam precursors within the mixing chamber of the bag when the base and shell are in the base/shell engaged position, thereby facilitating the foam reaction between the first and second foam precursors.

One or more embodiments of the machine may operate to create foam in bags with reduced disruption of nozzle operation caused by clogging or foam build-up, and therefore reduce the need and frequency of nozzle cleaning. Some embodiments of the machine may be devoid of structure to heat the foam precursors; and/or the machine may be used to create foam in a bag where without heating the foam precursors.

These and other objects, advantages, and features of the presently disclosed subject matter will be more readily understood and appreciated by reference to the detailed description and the drawings.

### BRIEF DESCRIPTION OF THE DRAWINGS

Figure 1 is a representative perspective view of an embodiment machine 10 having a roll 104 of series of bags 102 installed;
Figure 2 is a front elevation view of the machine of Figure 1, but without the installed bags;
Figure 3 is a right side elevation view of the machine of Figure 2, but without illustrating the injector assembly 50 and lift 51;
Figure 4 is a right side elevation view of the machine of Figure 3, but with the base and shell in the base/shell disengaged position;
Figure 5 is a front elevation view of the machine of Figure 4, but having the shell further opened for illustration purposes;
Figure 6 is a top view of the machine of Figure 3;
Figure 7 is a representative front view of the base 14 and shell 12 in the base/shell disengaged position and the injector assembly in the retracted mode;
Figure 8 is a representative partial cross-section view taken along line 8-8 of Figure 2 showing the divider 40 in the divider engaged position;
Figure 9 is a representative partial cross-sectional view similar to Figure 8, but with the divider 40 in the disengaged position;
Figure 10 is a representative partial cross-section view taken along line 10-10 of Figure 2;
Figure 11 is a representative partial cross-section view taken along line 11-11 of Figure 10;
Figure 12 is a representative exploded view of the base, shell, and injector assembly having bag 100 in the fill position;
Figure 13 is a representative sectional side view of the bag and the injector assembly in the retracted position;
Figure 14 is a representative sectional side view of the bag and the injector assembly in the engaged position;
Figure 15 is a representative view of the base, shell, and injector assembly with the injector assembly in the retracted position and the base and shell in the base/shell disengaged position;
Figure 16 is a representative view similar to Figure 15, but with the base and shell in the base/shell engaged position and the injector assembly in the engaged position;
Figure 17 is a representative view similar to Figure 16, but representing the injection of foam precursor;
Figure 18 is a representative view similar to Figure 17, but with the injector assembly in the retracted position after injecting the foam precursors into the first and second compartments of the mixing chamber of the bag;
Figure 19 is a representative view similar to Figure 18, but having a representation of the divider in the disengaged position so that the first and second foam precursors may react in the mixing chamber of the bag;
Figure 20 is a representative view similar and subsequent to Figure 19, but showing the base and shell in the base/shell disengaged position and representing the foam expanding into the remainder portion of the bag;
Figure 21 is a representative view of the foam precursor supply system;
Figure 22 is a representative view showing the effect on the bag held between the base and shell of the machine when in the base/shell engaged position and the divider engaged position, where the machine is not shown;
Figure 23 is the representative view of the effect on the bag as in Figure 22 but showing foam precursor in the first and second compartments of the bag;
Figure 24 is the representative view of the effect on the bag held between the base and shell of the machine when in the base/shell engaged position and the divider disengaged position, where the machine is not shown, showing first and second foam precursors mixed together;
Figure 25 is a representative view of the effect on the bag where the base and shell are in the base/shell disengaged position and divider is in the disengaged position, where the machine is not shown, showing the reacted foam expanded in the bag;
Figure 26 is a representative partial cross-section view similar to Figure 8, but showing bag 100 installed in the machine with the base and shell in the base/shell engaged position and the divider in the divider engaged position;
Figure 27 is a representative partial cross-section view similar to Figure 26, but showing the first and second foam precursors in the first and second compartments of the bag;
Figure 28 is a representative partial cross-section view similar to Figure 8, but showing the machine with the base and shell in the base/shell engaged position and the divider in the divider disengaged position;
Figure 29 is a representative partial cross-section view similar to Figure 27, but of an alternative embodiment showing bag 100 installed in machine 11 with the base and shell in the base/shell engaged position and the divider in the divider engaged position;
Figure 30 is a representative partial cross-section view similar to Figure 29, but showing the machine with the base and shell in the base/shell engaged position and the divider in the divider disengaged position;
Figure 31 is a representative partial cross-section view similar to Figure 30, but showing the machine with the base and shell in the base/shell engaged position, the divider in the divider disengaged position, and the mixers 43, 45 engaging the bag to provide mixing energy;
Figure 32 is a representative schematic drawing of the control system;
Figure 33 is a representative perspective view of an embodiment machine 300 having a roll 404 of series of bags 402 installed and the shell 312 in the base/shell engaged position;
Figure 34 is a representative partial perspective view of the shell 312, base 314, mixer 370, and nozzles 358, 360 of machine 300;
Figure 35 is a partial representative side cutaway view of machine 300 in the base/shell disengaged position and in the top jaw disengaged position before injection of foam precursors;
Figure 36 is a partial representative side cutaway view of machine 300 in the base/shell engaged position and in the top jaw disengaged position;
Figure 37 is a partial representative side cutaway view of machine 300 in the base/shell engaged position and in the top jaw engaged position;
Figure 38 is a partial representative side cutaway view of machine 300 in the base/shell engaged position and in the top jaw disengaged position after the injected foam precursors have been mixed; and
Figure 39 is a representative perspective view of an embodiment machine 300 having a roll 404 of series of bags 402 installed and the shell 312 in the base/shell disengaged position;

Various aspects of the subject matter disclosed herein are described with reference to the drawings. For purposes of simplicity, like numerals may be used to refer to like, similar, or corresponding elements of the various drawings. The drawings and detailed description are not intended to limit the claimed subject matter to the particular form disclosed. Rather, the intention is to cover all modifications, equivalents, and alternatives falling within scope of the claims.

### DETAILED DESCRIPTION

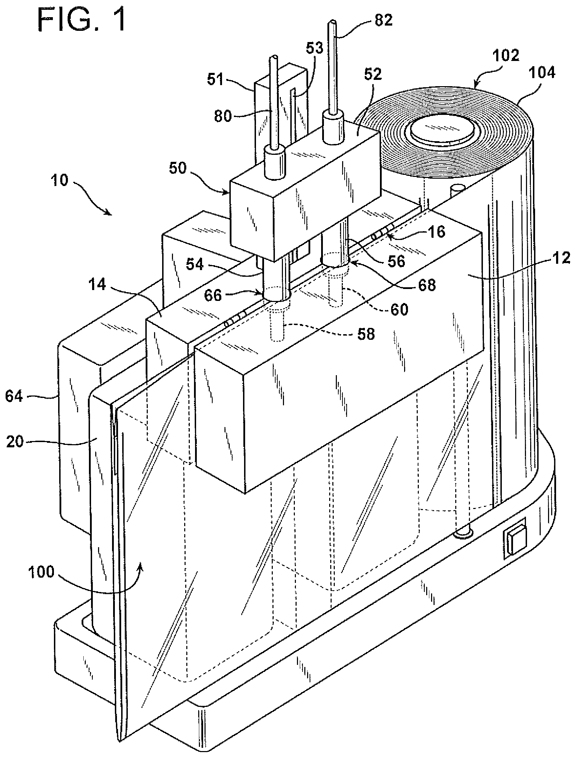

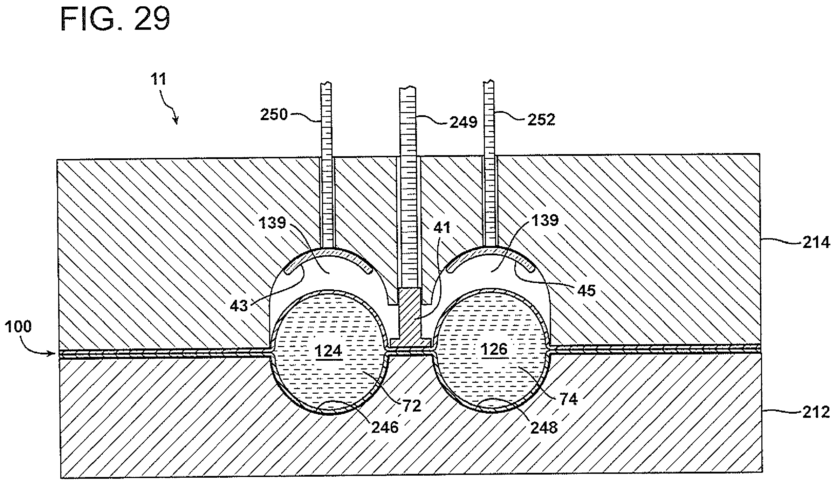

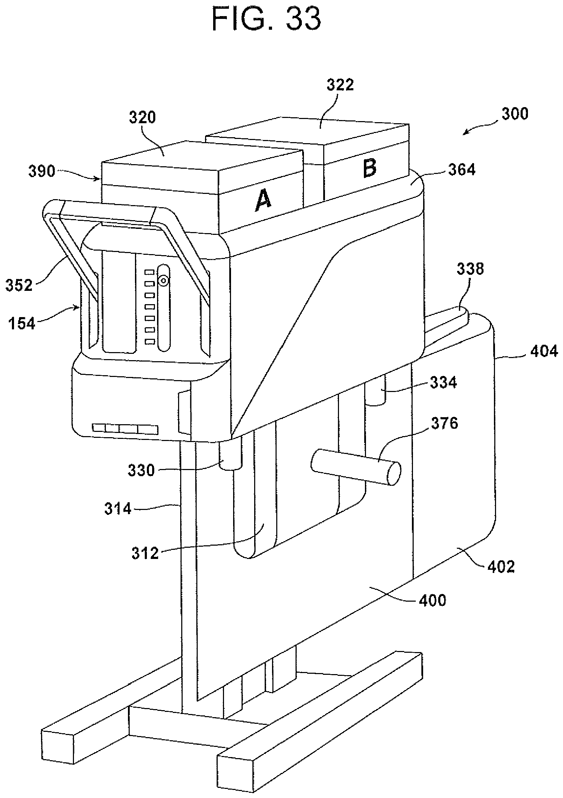

Various embodiments of the machines of the present invention, for example, machine 10 (Figure 1), machine 11 (Figure 29), and machine 300 (Figure 33) may be used to produce foam within a bag, for example, bag 100.

### Bag

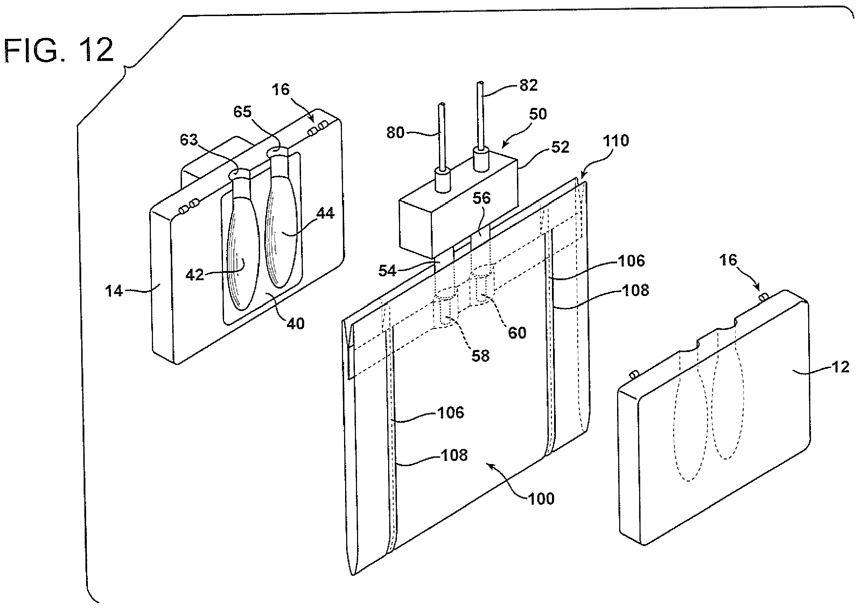

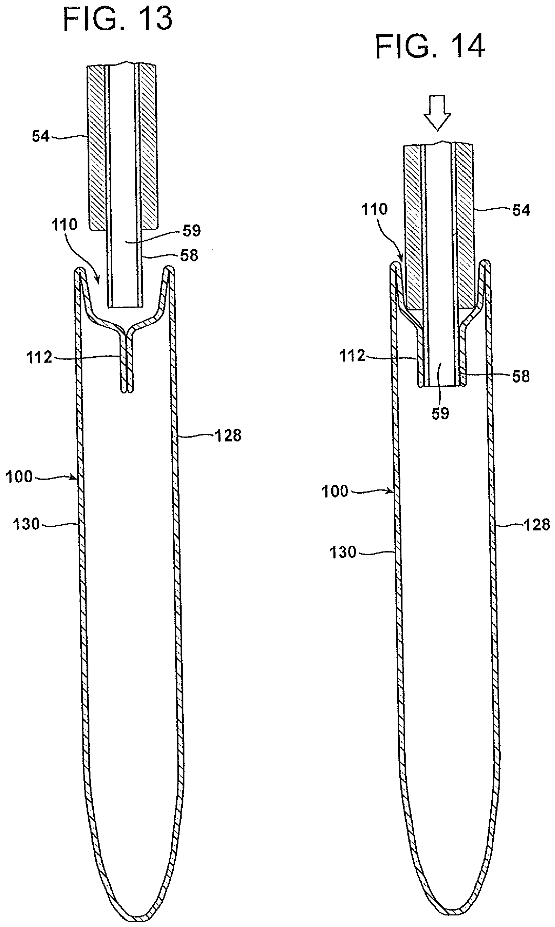

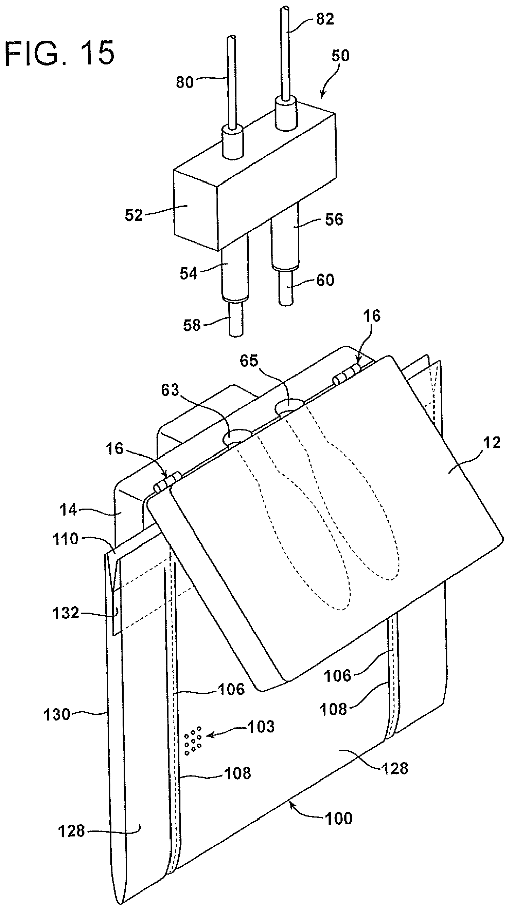

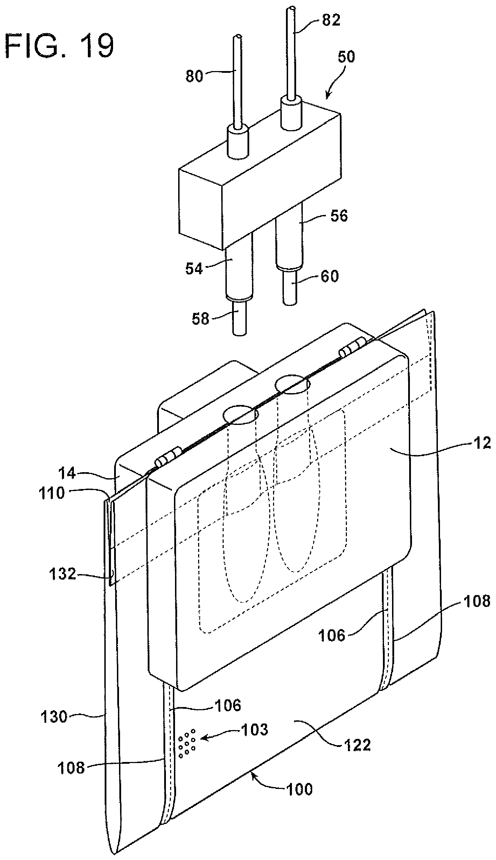

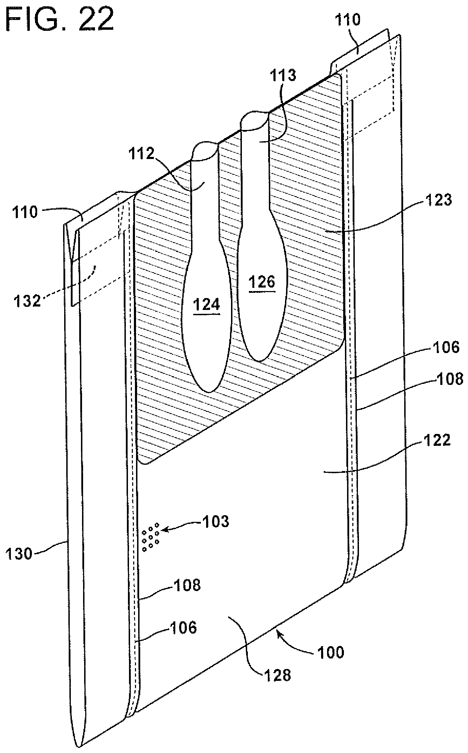

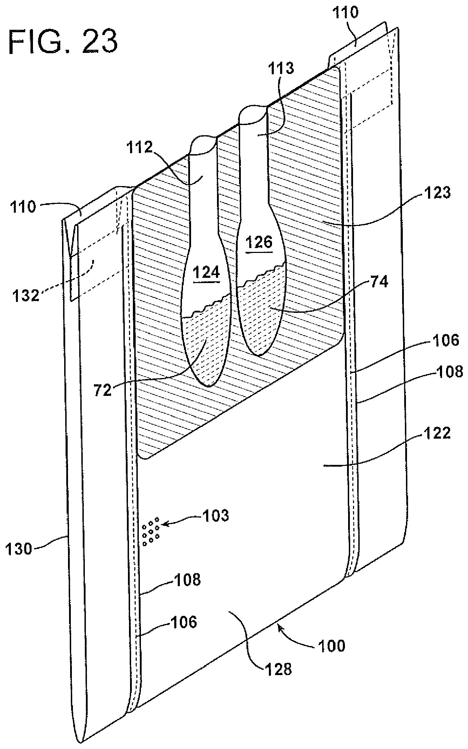

Bag 100 may comprise front and rear sheets 128, 130 sealed together in selected areas. (Figures 12-14.) For example, bag 100 may comprise seals 108 attaching the front and rear sheets together in selected areas to form and define one or more edge boundaries of the interior of the bag. (Figures 15-20, 22-25.) Seals 108 may be formed by heat sealing the sheets together or by applying an adhesive to hold the sheets together in the desired regions. One edge of the bag may be formed by folding a sheet over upon itself (e.g., center fold) such that a seal is not required to form the corresponding edge that in essence forms a demarcation between the front and rear sheets. (Figures 13-14.)

Bag 100 may comprise trough 110, for example, forming the top edge of the bag. Trough 110 may be formed, for example, by attaching the front and rear sheets 128, 130 to each other, for example by a fin seal to create fin seal region 132. The trough 110 may also be formed without a seal in fin seal region 132 but having end seals 108 extending to the top of the trough at each end to "close" the trough at each end.

The bag 100 may comprise first one-way valve 112 and second one-way valve 113, for example positioned in the fin seal region 132. Suitable one-way valves (also described in the art as self-closing valves and self-sealing valves) are known in the art; for example, as described by one or more of U.S. Patents 4,966,197; 4,917,646; 5,348,157; 5,803,263; 5,830,780.

By way of example, the one-way valves 112, 113 may each comprise a first sheet of thermoplastic material and a second sheet of thermoplastic material in face-to-face relationship with each other. To form the one-way valve, the sheets of thermoplastic material may be secured together along a portion of their longitudinal edges such that the sheets define a passageway therebetween. The passageway defines an inlet end and an outlet end. The longitudinal edges are secured through the portion of the edges nearest the inlet end with the remainder toward the outlet end being opened at each longitudinal edge.

A plurality of bags 100 may be provided as series of bags 102 configured as roll 104. (Figure 1.) Each of the adjoining bags 100 may be separated form the adjoining bag by seal 108. A line of weakening 106 may be formed between adjoining bags 100, for example, formed within seal 108, to facilitate detachment of adjoining bags. For example, line of weakening 106 may comprise a plurality of perforations formed in seal 108 (or between adjacent seals). Additionally, the plurality of bags may be supplied in a fan-fold stacked arrangement, or may be supplied as independent singular bags

Bag 100 may comprise one or more vents, for example, vent 103. (Figures 15-25.) A suitable vent is designed and/or positioned to provide gas or vapor communication between the interior of the bag and the outside of the bag, while minimizing the communication of foam (and/or reacting, expanding foam) between the interior of the bag and the exterior of the bag. The vent, or one or more vents, may be positioned in bag 100 to facilitate the flow of by-product gas from the interior of the bag, while minimizing the flow of foam or reacting or expanding foam from the bag 100 through the one or more vents. For example, the vent 103 may be located or positioned at a portion of the bag that is outside of the mixing chamber 120 of the bag, discussed herein.

Vent 103 may comprise one or more, for example, a plurality of, perforations or slits in the sheet. Vent 103 may be formed in either the front sheet 128 or the rear sheet 130 or both of bag 100. Such vent is described, for example, in U.S. Patents 5,899,325 and 6,712,201. Another embodiment of the vent comprises a relatively small opening or gap in an edge seal of the bag, for example as disclosed in U.S. Patent 6,550,229. Further, such opening or gap may be surrounded by a pattern of partial seals forming a tortuous path through which gasses may pass, but through which the flow of foam and liquid is impeded, as set forth for example, in U.S. Patents 5,376,219 and 5,699,902. In another embodiment of the vent, the vent may comprise a gas-permeable material such as nonwoven bonded polyolefin fibers, microporous polytetrafluoroethylene (PTFE), textile fabrics such as woven polyolefins, porous papers, such as surgical grade kraft paper, spunbonded polypropylene, and microporous membranes. The amount and type of the gas-permeable material is sufficient to allow the gas from the interior of the bag to escape while impeding the escape of expanding foam or liquids from the interior of the bag. Such vent is described in WO 1998/04649 8.

The sheets 128, 130 may comprise materials useful for formation into bag 100, such as polymeric films or fibrous sheets comprising for example paper. Useful polymeric films may comprise one or more thermoplastic materials selected from polyolefins, for example, polyethylene homopolymers, such as low density polyethylene (LDPE) and high density polyethylene (HDPE), polyethylene copolymers, such as, ionomer, ethylene/vinyl acetate copolymer (EVA), ethylene/(meth)acrylate copolymer (EMA), heterogeneous (e.g., Zeigler-Natta catalyzed) ethylene/alpha-olefin copolymers, homogeneous (e.g., metallocene, single-cite catalyzed) ethylene/alpha-olefin copolymers (e.g., linear low density polyethylene (LLDPE), linear medium density polyethylene (LMDPE), very low density polyethylene (VLDPE), and ultra-low density polyethylene (ULDPE)), polypropylene homopolymer, polypropylene copolymer (e.g., propylene/ethylene copolymer); and polyesters, polystyrenes, polyamides, and polycarbonates. The polymeric film may be monolayer or multilayer, for example, a three-layer film having a sealant layer, a core layer, and an outer abuse layer. The film may be made by film-forming methods known in the art, such as coextrusion and lamination. Useful sheet material is available, for example, from Sealed Air Corporation in a centerfolded roll configuration under the SpeedyPacker® silver SP19 and SP30 trademarks. Sheet material available as a roll of converted three-sided bags -- having the transverse sides formed by heat seals with perforations through the seals, one longitudinal side formed by a centerfold, and the other longitudinal side open -- is available for example from Sealed Air Corporation under the Instapacker® Tabletop white IP16 and IP24 trademarks.

### Foam Precursor Supply System

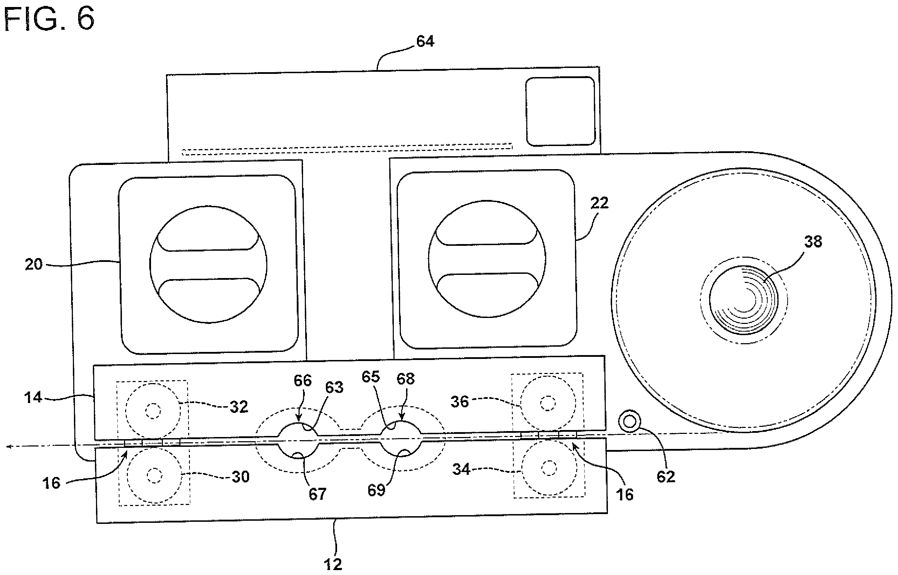

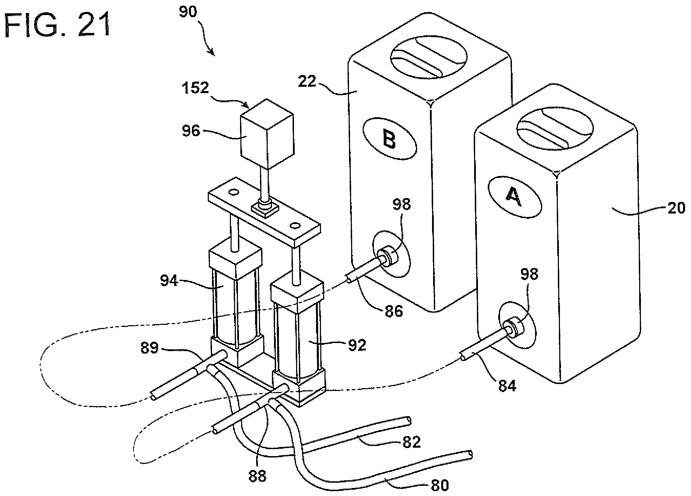

Machine 10 comprises foam precursor supply system 90. (Figure 21.) The supply system comprises first foam precursor supply tank 20 and second foam precursor supply tank 22, which are containers suitable for holding a reservoir of first and second foam precursors 72, 74, respectively. (Figures 6 and 21.) Supply tanks 20, 22 may be a bag-in-box container, where the foam precursor is stored within and supplied from a bag housed within a supporting box.

The first foam precursor source tube or hose 84 may be attached to the first supply tank 20 by a hose quick-connect system 98. Such hose quick-connect systems may include a male end attached to the hose 84 and a female end attached to the container 20. The male end of the hose may facilitate puncturing a seal on the container having the female end of the connect. Similarly, second foam precursor source tube or hose 86 may be attached to the second supply tank 22 by a hose quick-connect system 98.

The hose 84 may also be attached to the inlet end of the corresponding three-way shuttle valve 88, having the inlet/outlet end of the three-way shuttle valve attached to first piston 92 and the outlet end of the three-way shuttle valve attached to first foam precursor supply tube or hose 80. Similarly, the hose 86 may also be attached to the inlet end of corresponding three-way shuttle valve 89, having the inlet/outlet end of the three-way shuttle valve attached to second piston 94 and the outlet end of the three-way shuttle valve attached to second foam precursor supply tube or hose 82. The first and second foam precursor supply hoses 80, 82 feed the first and second foam precursors to the injector assembly 50.

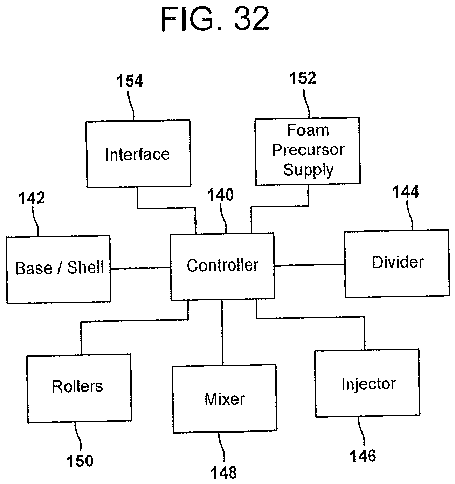

The first and second pistons 92, 94 are driven by drive mechanism 152 associated with the foam precursor supply system 90, for example, motor 96, such as a linear stepper motor. (Figures 21, 32.) Controller 140 may direct the movement of the pistons 92, 94 by signaling the drive mechanism 152.

Alternative to a piston-based pump system, the foam precursor supply system may comprise other types of pumps, such as one or more diaphragm pumps or bellows pumps, for example, in-line one or more of the supply hoses. The bellows type pump may be housed within the box Any of the pumps, for example, the bellows pump, may be adapted to be manually driven, or alternatively, may be driven by a motor controlled by controller 140.

By way of example, the first foam precursor 72 may comprise one or more: (i) hydroxyl-containing materials, such as polyols (i.e., compounds that contain multiple hydroxyl groups), (ii) water, and optionally (iii) one or more catalysts, foam stabilizers or surfactants, compatibilizers, or other additives (e.g., fragrances, flame retardants, colorants, and viscosity-control agents); and the second foam precursor 74 may comprise one or more isocyanates, such as toluene diisocyanate (TDI) and methylene diphenylisocyanate (MDI), all as conventionally used in foam-in-place/foam-in-bag packaging. Such first and second foam precurors are described, for example, in U.S. Patent 6,034,197, which is incorporated herein in its entirety by reference. Useful polyols include, for example, polyether polyols, diols, such as aliphatic diols, and triols. It is useful to provide the first and second foam precursors 72, 74 as a "two-component" system having the first foam precursor 72 comprising the one or more polyols and water, and the second foam precursor 74 comprising the one or more isocyanates. It may also be useful for the first foam precusor 72 to further comprise the one or more suitable catalysts, surfactants, and any other additives, although one or more of these could be provided as part of the second foam precursor 74, provided there are no significant stability issues.

Useful foam precursors are available having the first foam precursor and the second foam precursor provided in separate containers, for example, from Sealed Air Corporation under the Ultralite®, Instafill®, Instapak®-40W, Instapak®-50W, Instapak® - 75W, Instapak®-Molding Foam, Instapak® FlowRite™, GFlex®, GFlex® QS, Instaflex™, Instapak® Rigid, and Instapak® F9401 trademarks.

### Injector Assembly

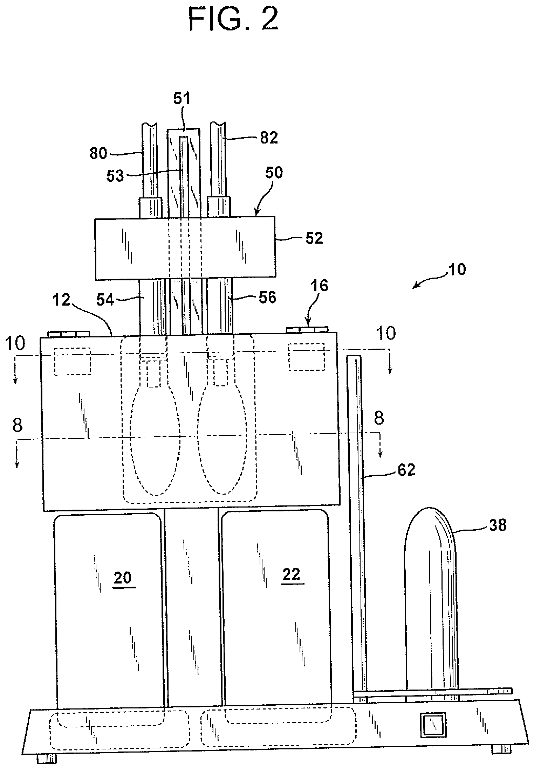

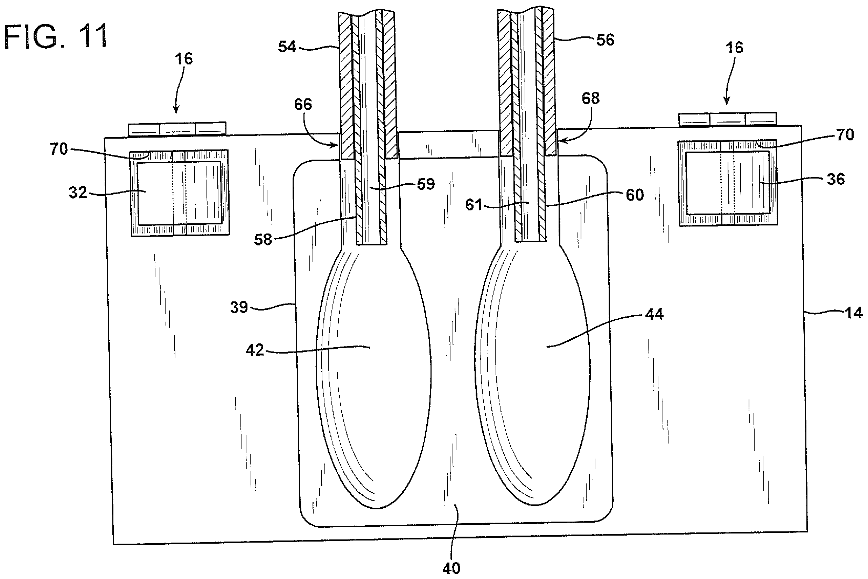

Machine 10 comprises injector assembly 50. (Figures 1-2.) Injector 50 comprises injector block 52 movably supported by lift 51. For example, the injector block 52 may be slidably attached to the lift 51 along lift guide channel 53, and may driven up and down, for example, by a drive mechanism 146, such as a powered screw drive (not visible) enclosed within lift 51. The drive mechanism 146, such as a powered lift drive, may be directed by controller 140. (Figure 32.) The injector may be moveable between an injector engaged position (Figures 1-2, 11, 14, and 16-17) and an injector retracted position (Figures 13, 15, 18-20).

First nozzle block 54 extends from the injector block 52 and supports first nozzle 58, which defines lumen 59. Second nozzle block 56 extends from the injector block 52 and supports second nozzle 60, which defines lumen 61. The injector 50 is adapted to receive the first and second foam precursors 72, 74 from the first and second foam precursor supply hoses 80, 82, respectively, of the foam precursor supply system 90, and deliver these precursors through the lumens 59, 61 respectively of the first and second nozzles 58, 60.

### Base and Shell

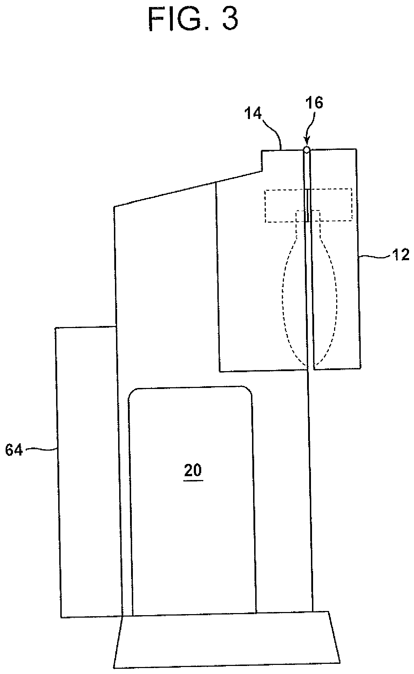

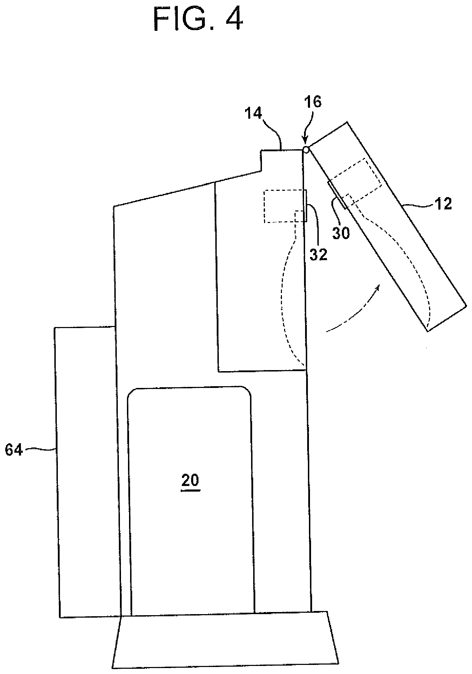

Machine 10 comprises base 14 and shell 12 movable relative to each other between a base/shell engaged position (e.g., Figures 1 and 3) and a base/shell disengaged position (e.g., Figure 4). The base and shell are moveable relative each other, for example, by pivoting about hinge 16. The base and shell may be configured such that they are biased to return to a position selected from the base/shell engaged position and the base/shell disengaged position. For example, the hinge 16 may comprise a spring (e.g., may be spring loaded) to provide a bias to maintain the base and shell in either of these positions, for example, may be biased to maintain the base and shell normally in the base/shell engaged position. The base and shell may be movable relative to each other, for example, powered by drive mechanism 142, such as any of a motor, actuator, piston, and solenoid, which may be directed by controller 140. (Figure 32.)

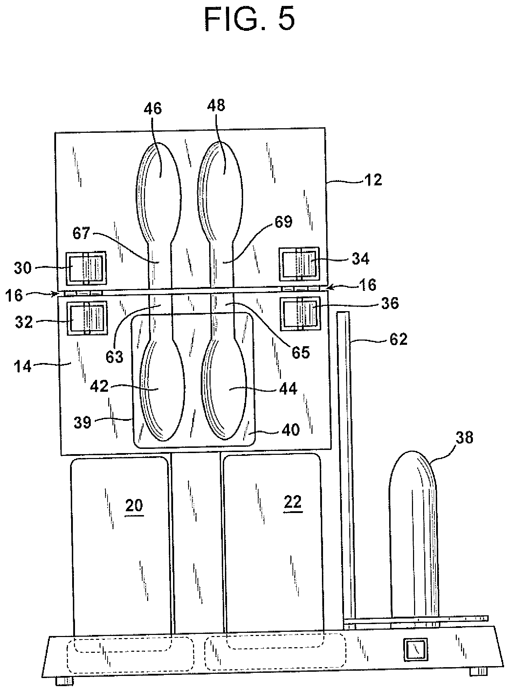

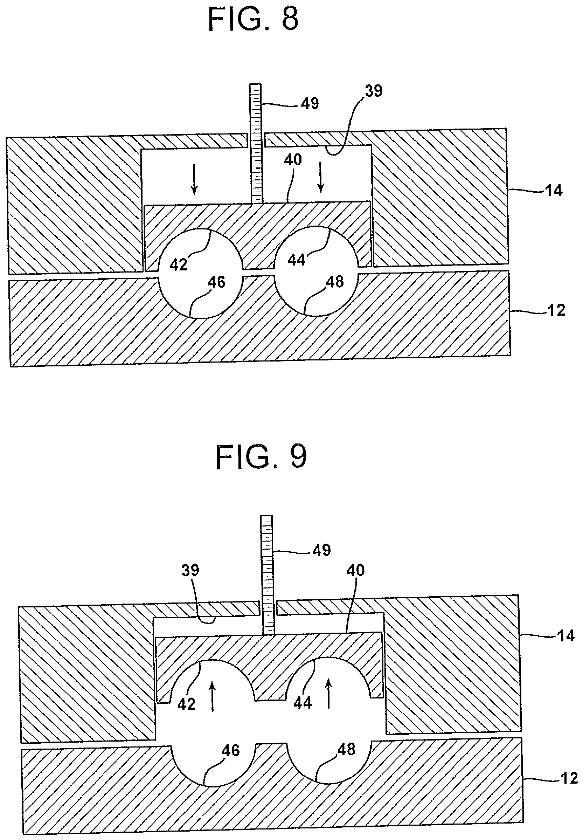

Base 14 defines cavity 39. (Figure 9.) Base 14 may define first channel 63 and second channel 65 extending from the base cavity 39 to the top of the base. (Figure 5.)

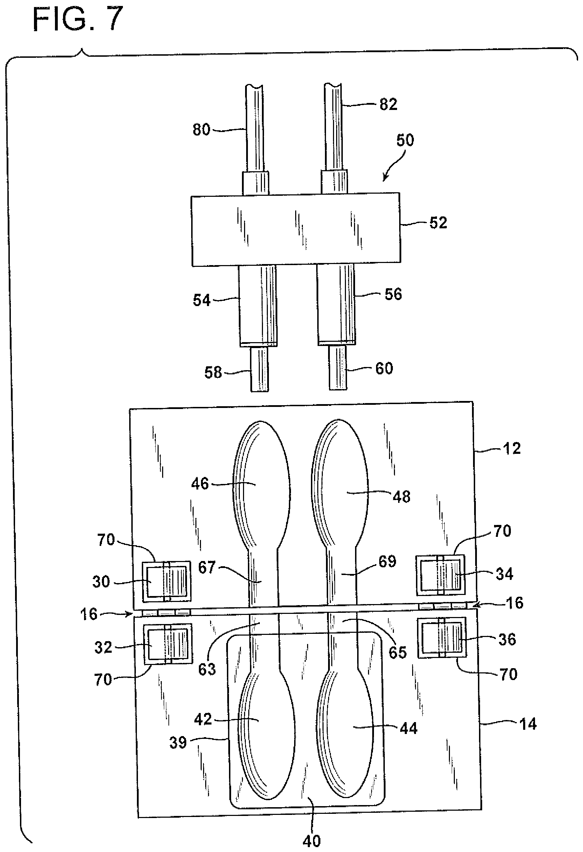

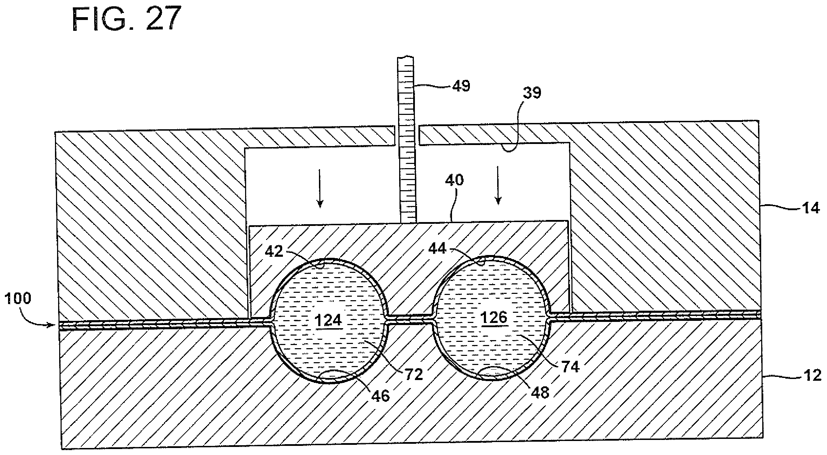

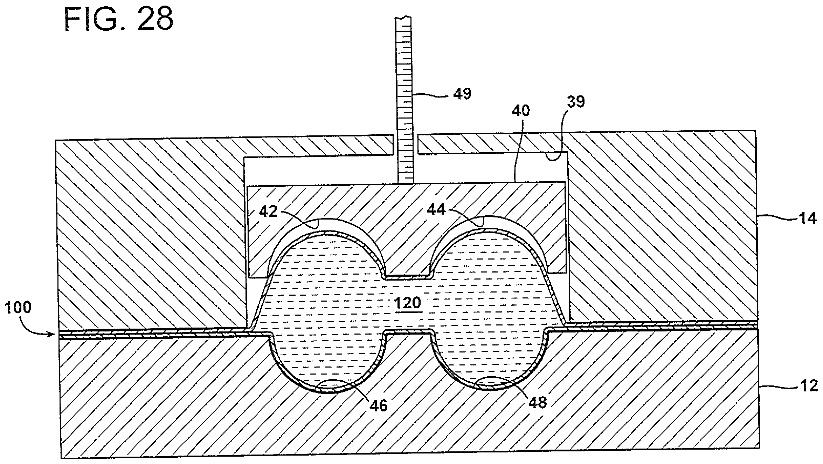

Base 14 may moveably support divider 40 within cavity 39. (Figures 5, 7-9, 26-28.) Divider 40 may define first concave section 42 and second concave section 44. The divider 40 is movable relative to the base and shell between a divider engaged position (Figures 8 and 26-27) and a divider disengaged position (Figures 9 and 28). Divider 40 may be moved by drive mechanism 144 associated with the divider, for example, one or more of a motor, actuator, piston, and solenoid. For example, divider 40 may comprise rod 49 slidably received by base 14. Rod 49 may be selectively driven forward and backward within base cavity 39 by any of the drive mechanisms 144. The drive mechanism 144 may be directed by controller 140. (Figure 32.)

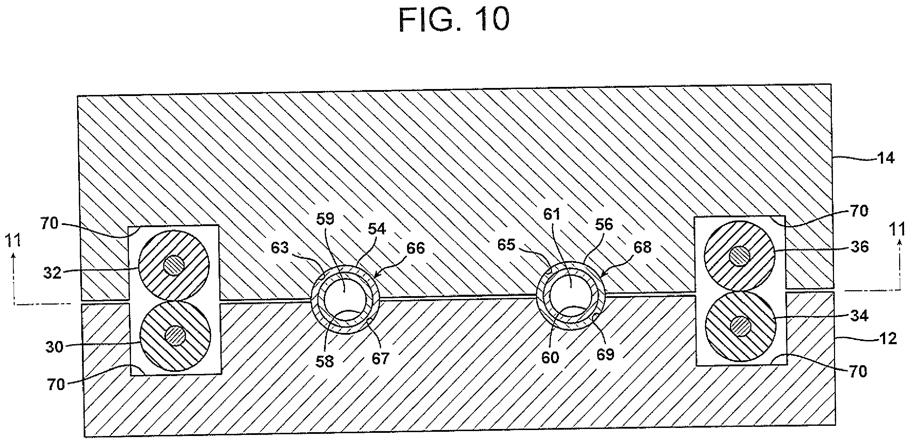

Base 14 may support rear right roller 32 and rear left roller 36 rotatably mounted at least partially within associated roller recesses 70 defined within base 14. (Figure 10.) One or more of the rollers 30, 32, 34, 36 may be selectively driven by a drive mechanism 150, such as a motor, directed by controller 140. (Figure 32.)

Shell 12 may define first concave section 46 and second concave section 48. The first concave section 46 of the shell may correspond to and be aligned with the first concave section 42 of divider 40 when the base and shell are in the base/shell engaged position. The second concave section 48 of the shell may correspond to and be aligned with the second concave section 44 of divider 40 when the base and shell are in the base/shell engaged position. Shell 12 may support front right roller 30 and front left roller 34 rotatably mounted at least partially within associated roller recesses 70 defined within shell 12. (Figure 10.)

Shell 12 may define first channel 67 extending from the first concave section 46 to the top of the shell. Shell 12 may also define second channel 69 extending from the second concave section 48 to the top of the shell. (Figures 5-7.) The base 14 and shell 12 may cooperate in the base/shell engaged position to define first throat 66 and second throat 68. (Figure 1.) For example, first channel 63 of the base and first channel 67 of the shell may oppose each other and cooperate to define first throat 66; and second channel 65 of the base and second channel 69 of the shell may oppose each other and cooperate to define second throat 68. The first throat 66 may surround and engage first nozzle block 54; the second throat 68 may surround and engage second nozzle block 56. (Figure 10.)

### Other Structure

Machine 10 may comprise spindle 38 adapted to support roll of bags 104. Guide roller 62 may be provided to assist in guiding the series of bags 102 from the roll location on the spindle to between the base 14 and shell 12.

A controller 140 (Figure 32) and/or one or more of the various drive mechanisms discussed herein may be housed in cabinet 64. (Figure 1.) The controller 140 may receive and send the various status, activation, and control signals described herein along various input/output connections and signal transmission lines between the controller 140 and the various sensors and controlled devices described herein.

The controller 140 may comprise one or more of:
(1) a programmable logic controller ("PLC"),
(2) a central processing unit ("CPU"), for example, comprising a microprocessor, to control the functions and operations of the controller,
(3) a read only memory ("ROM"), for example, to store data and program code,
(4) a random access memory ("RAM"), for example, to provide a work area and a storage area,
(5) a printed circuit assembly containing a micro controller unit (MCU), which stores pre-programmed operating codes,
(6) a personal computer (PC),
(7) various input/output (I/O) interfaces for receiving and sending signals to interface with, direct, or control the operation of any of such drive mechanisms (e.g., motors, actuators, pistons, solenoids, and the like) by any of local control (e.g., via an operator interface), remote control, and/or pre-programmed control, and
(8) other interface, storage, display, and peripheral devices as are known in the art. The controller 140 may also store and execute software control program code for carrying out the various control and monitoring functions described herein.

An interface 154 may provide for human or other interaction or communication with the controller. Interface 154 may comprise one or more of display panels (e.g., liquid crystal displays), monitors, keypads, keyboards, and computer input/output access ports, for example, to provide for loading or modifying software that runs on the CPU of a controller.

### Second Embodiment

Figures 29-31 illustrate machine 11, which is a second embodiment of the present invention varying from machine 10 in ways discussed herein. Machine 11 comprises base 214 and shell 212. Base 214 defines cavity 139. Base 214 and shell 212 are movable relative to each other as described herein with respect to the first embodiment.

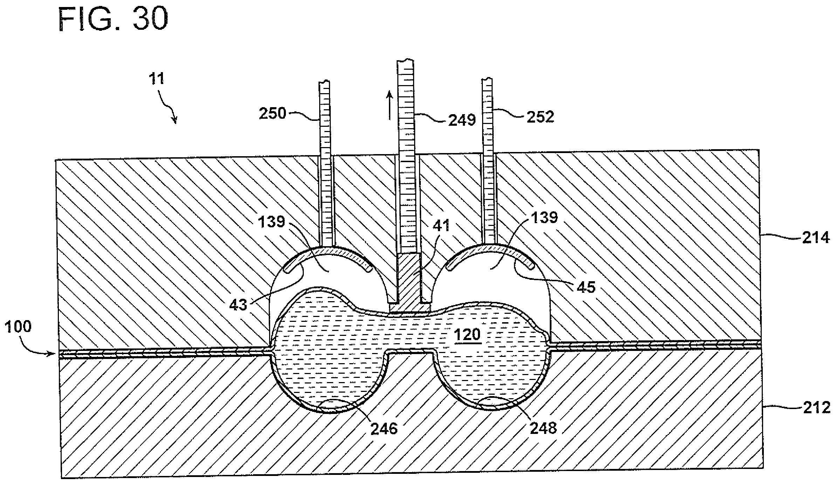

Base 214 may moveably support divider 41 within cavity 139. (Figures 29-31.) The divider 41 is movable relative to the base and shell between a divider engaged position (Figure 29) and a divider disengaged position (Figures 30-31). Divider 41 may be moved by drive mechanism 144 associated with the divider, for example, by one or more of a motor, actuator, piston, and solenoid. For example, divider 41 may comprise rod 249 slidably received by base 214. Rod 249 may be selectively driven forward and backward within base cavity 139 by any of the drive mechanisms 144. The drive mechanism 144 may be directed by controller 140. (Figure 32.) Shell 212 may define first concave section 246 and second concave section 248.

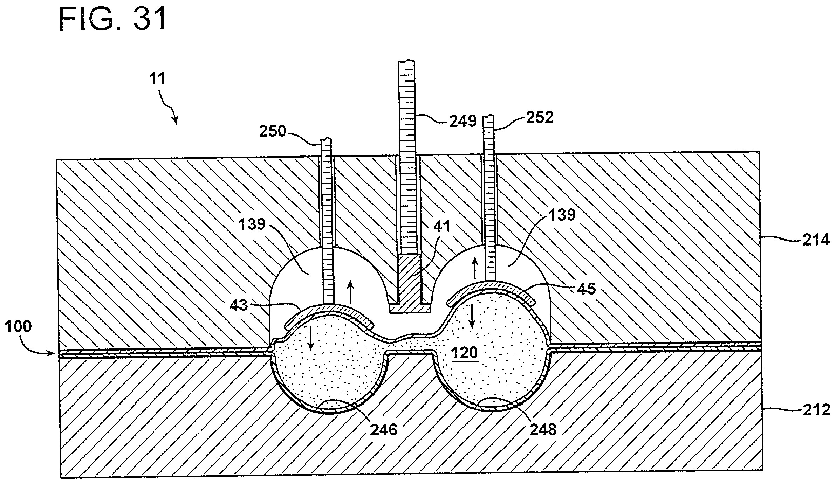

Base 214 may movably support first mixer 43 and second mixer 45 within cavity 139. The mixers may comprise rods 250 and 252 slidably received by base 214. The first and second mixers 43, 45 are movable between a mixer disengaged position (Figures 29-30) and a mixer engaged position (Figure 31). The first and second mixers 43, 45, and/or rods 250, 252 may be selectively driven forward and backward within base cavity 139 by drive mechanism 148 associated with the mixers, for example, one or more of a motor, actuator, piston, and solenoid, which may be directed by controller 140.

### Additional Embodiments

Although, machines 10 and 11 have been described with respect to first and second foam precursors such that these embodiments utilize, for example, first and second foam precursor supply tanks, first and second foam precursor supply lines, first and second nozzles, first and second concave sections of the base and shell, and the like, additional embodiments of the machine may comprise structure to process one or more additional foam precursors, such as a third foam precursor. These additional embodiments are useful where, for example, it is desirable to maintain three distinct compounds or mixtures separate from each other until near or at the time for creation of a foam. For example, a third foam precursor may comprise one or more of any of hydroxyl-containing materials (e.g., polyols), catalysts, or isocyanates that may react with, degrade in the presence of, or have a decreased shelf life if mixed or combined with, the first and second foam precursors described above.

For example, a third foam precursor supply tank may provide a third foam precursor to combine with one of the first or second foam precursors in the corresponding supply line to the injector assembly. Also by way of example, the third foam precursor may combine with one of the first or second foam precursors in the corresponding first or second nozzles. Also, a third foam precursor may be provided by a third supply line into a third nozzle distinct from the first and second nozzles described above. The third nozzle may correspond with third concave sections of the base and shell, which in combination with a second divider, may compliment each other to form a third compartment within the bag to maintain the third foam precursor isolated from the first and second compartments of the bag until mixing to form the foam is desired. In such embodiment, it may be useful to incorporate a third one-way valve in the bag.

Although the bag has been described as comprising first and second one-way valves, in some embodiments of the machine the bag may be provided without one-way valves but with the top edge in an open configuration so that the first and second nozzles do not have to align for insertion into the valves of the bag. In such an arrangement, the top open edge may be sealed closed after injection of the foam precursors into the bag, for example, by incorporating a sealing device such as described in U.S. Patent 6,550,229. For example, the heat seal device may comprise a pair of opposing counter-rotating rollers and an electrically conducting heating element that contacts one sheet as the front and rear sheets pass between the rollers to press the heated sheets together to form a longitudinal heat seal across the top of the bag to "close" the bag. Such heat sealing capability may be provided in conjunction, for example, with rollers 30, 32 described herein. Further, such sealing devices can be used even where bags incorporate the one-way valves in order to seal the valves "permanently" closed after the foam precursors have been injected. The heat seal device may be located downline from the injector, for example, downline from the base and shell, for example, to effect the transverse heat seal to close the top edge of the bag after the precursors have been mixed together and expanded into the remainder portion of the bag.

Although the bags may be provided as a pre-formed series of bags 102, a portion or all of the bags may be formed by the machine itself from a roll of sheet material, for example, by incorporating capability to make any of heat seals, perforations, folds, and/or cuts, for example, by transverse sealing/severing devices, all as disclosed for example, by any of U.S. Patents 4,800,708; 4,854,109; 5,027,583; 5,376,219; 6,003,288; 6,550,229; and 6,675,557.

### Operation

The series of bags 102 may be installed on spindle 38 so that (i) the edge comprising trough 110 is oriented in the top or upward position and (ii) the first and second one-way valves 112, 113 in the fin seal region 132 are oriented at the top of the bag. (Figure 1.) The base 14 and shell 12 (or base 214, 212) are placed in the disengaged position, in which the base and shell are spaced apart to permit insertion of the bag between the base and shell. (Figures 4 and 15.) The series of bags can be installed between upstream opposing front left roller 34 and rear left roller 36 and also between downstream opposing front right roller 30 and rear right roller 32 to set up a bag in the machine.

The bag may be positioned in the machine such that the first and second one-way valves 112, 113 are aligned with and/or beneath throats 66 and 68 formed when the base and shell are placed in the base/shell engaged position. To assist in this alignment, the bag may be provided with an indicator such as an printed "eye spot" or mark (e.g., bar code) that is detectable by a sensor (not illustrated), which can send a corresponding signal to the controller. The controller may index the bags by directing one or more rollers to stop or forward the series of bags until receiving a confirmation signal that the sensor has detected the indicator showing that the bag is properly aligned. The sensor may comprise, for example, one or more of an optical sensing device, such as a photo-eye, an electric-eye, or a photo-detector. Such sensors and their operation are known to those of skill in the art; see for example, U.S. Patent 6,675,557 (column 10), previously incorporated herein. The opposing pairs of rollers may counter-rotate to pull the series of bags from the spindle and between the base and shell.

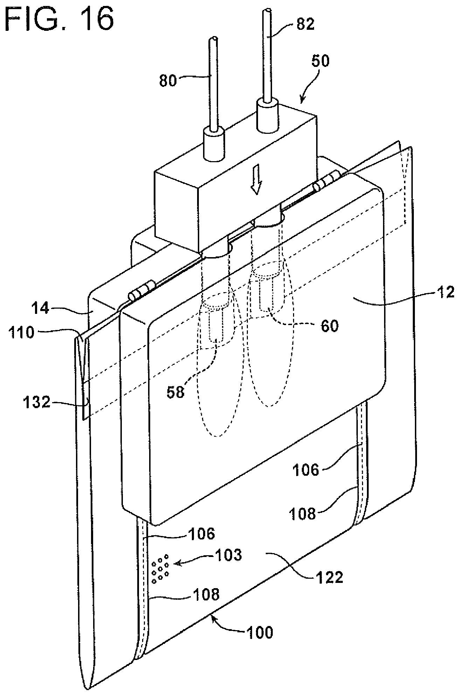

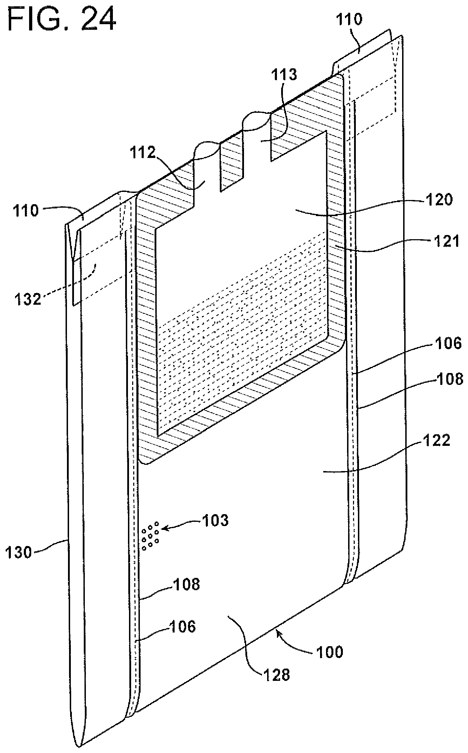

The base 14 and shell 12 (or base 214, 212) may be moved relative each other to be placed in the base/shell engaged position in which the shell and base press together to hold the bag 100 between the base and shell to divide the bag 100 into a mixing chamber 120 and a remainder portion 122 such that the mixing chamber 120 is isolated from the remainder portion 122 of the bag. (Figures 16 and 24.) Compressed region 121 of bag 100 illustrates and represents the region of bag 100 that is pressed together by the base 14 and shell 12 so that the mixing chamber 120 is isolated from the remainder portion 122 of the bag. In this context, "isolated" means that the mixing chamber and the remainder portion of the bag are not in liquid communication with each other, such that foam liquid precursor that may be injected or placed into the mixing chamber does not transfer or leak into the remainder portion of the bag. The base and shell may be moved relative each other into the base/shell engaged position by spring force provided, for example, at one or more of hinges 16 biased in the base/shell engaged position.

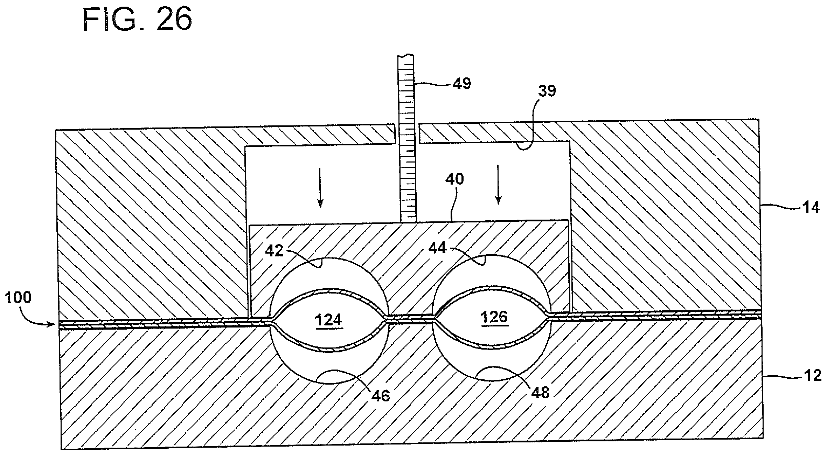

In the base/shell engaged position holding the bag, in a first embodiment divider 40 may be moved relative to the base 14 and shell 12 to the divider engaged position (Figures 26-27) and in a second embodiment divider 41 may be moved relative to the base 214 and shell 212 to the divider engaged position (Figure 29). In the divider engaged position, the divider engages the bag to partition the mixing chamber 120 of the bag into first and second compartments 124, 126 that are isolated from each other while the divider is in the engaged position. Compressed region 123 of bag 100 illustrates and represents the region of bag 100 that is pressed together by the divider 40 as well as base 14 and shell 12, so that the first and second compartments of the bag are isolated from each other and the remainder portion 122 of the bag. In this context, "isolated" means that the first and second compartments of the bag are not in liquid communication with each other, such that foam liquid precursor that may be injected or placed into either of the first and second compartments does not transfer or leak into the other compartment of the bag. In the divider engaged position, the first one-way valve 112 corresponding to first compartment 124 of the bag is also isolated from the second one-way valve 113 corresponding to second compartment 126 of the bag.

Injector assembly 50 may be moved or positioned so that (i) the first nozzle block 54 is held between or engaged by first throat 66, which is formed by opposing first channel 63 of base 14 and first channel 67 of shell 12 when the base and shell are moved to the base/shell engaged position and similarly, (ii) the first nozzle block 56 is held between or engaged by second throat 68, which is formed by opposing second channel 65 of base 14 and second channel 69 of shell 12 when the base and shell are moved to the base/shell engaged position. (Figure 10.) In this injector engaged position the first nozzle 58 pushes and extends into the first one-way valve 112 of bag 100 (Figure 14) and the second nozzle 60 extends into the second one-way valve 113 of bag 100. (Figure 16.) A small burst of pressurized air may be injected from an air supply source (not illustrated) to the injector 50 and into the first and second one-way valves to assist in opening the valves before the first and second nozzles are extended into the valves.

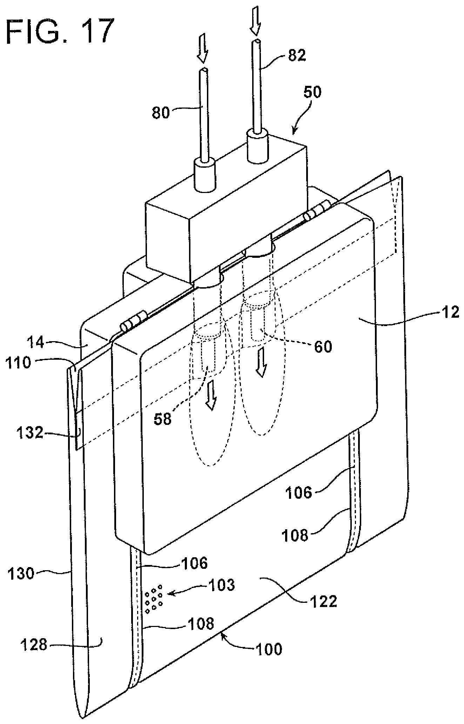

Motor 96 may be directed to move first piston 92 to pump a supply of first foam precursor 72 from the reservoir within piston 92 through first three-way shuttle valve 88 and into first foam supply hose 80. The desired selected amount of first foam precursor 72 sent into the supply hose 80, and subsequently into the first compartment of the bag, may be determined by the amount of travel of the piston 92. (Figure 21.) The first foam precursor 72 flows through supply hose 80 into injector 50, through the lumen 59 of nozzle 58 and thereby through first one-way valve 112 into first compartment 124 of the bag. (Figures 17, 23, and 27.) The motor 96 may then drive the piston 92 in the opposite direction by a selected distance to draw a selected amount of first foam precursor from first foam precursor supply tank 20 through the first three-way shuttle valve 88 and into the piston reservoir.

Similarly, motor 96 may be directed to move second piston 94 to pump a supply of second foam precursor 74 from the reservoir within piston 94 through second three-way shuttle valve 89 and into second foam supply hose 82. The desired selected amount of second foam precursor 74 sent into the supply hose 82, and subsequently into the second compartment of the bag, may be determined by the amount of travel of the piston 94. (Figure 21.) The second foam precursor 74 flows through supply hose 82 into injector 50, through the lumen 61 of nozzle 60 and thereby through second one-way valve 113 into second compartment 126 of the bag. (Figures 17, 23 and 27.) The motor 96 may then drive the piston 94 in the opposite direction by a selected distance to draw a selected amount of second foam precursor from second foam precursor supply tank 22 through the second three-way shuttle valve 89 and into the piston reservoir. A small burst of pressurized air may be injected from an air supply source (not illustrated) to the injector 50 and into the first and second nozzles to clear the remaining first and second foam precursors from the nozzles into the first and second compartments to assist in clearing the nozzles.

The precursors may be supplied to the bag at ambient temperature, in which case the machine may be devoid of structure having a primary purpose of heating one or more of the precursors to above ambient temperature. Alternatively, one or more of the foam precursors may be heated to a desired temperature above ambient temperature, for example, before or during supply to and/or from the injector. Such heating may be accomplished, for example, by using a heating device such as heating electrical resistance "tape" wrapped around one or more of the hoses, by heating one or more portions of the injector through which the precursors pass, and/or by heating the supply tanks of the precursors.

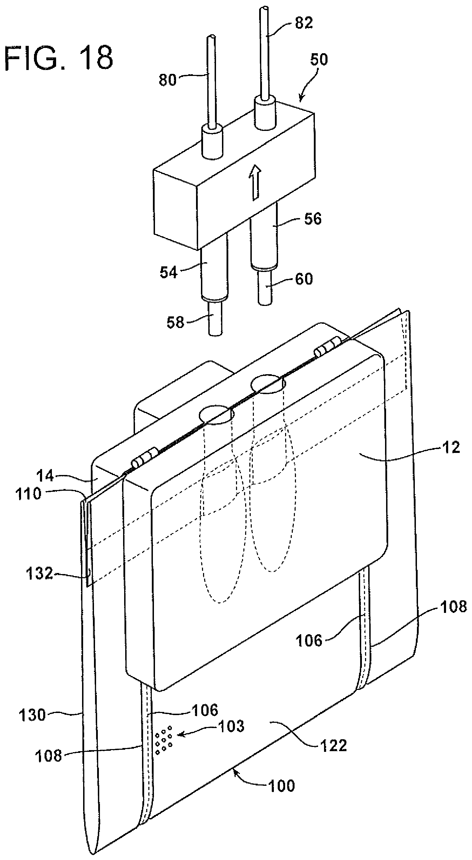

After injection of the foam precursors, injector assembly 50 may be moved or positioned in the retracted position so that the first and second nozzles 58, 60 are withdrawn from the first and second one-way valves 112, 113, respectively. (Figure 18.) The one-way valves are then unencumbered by the nozzles so that the valves may preclude reverse flow of foam precursor from the first or second compartments of the bag. In this manner, there is minimal chance that the first and second foam precursors would encounter each other in the lumens 59, 61 of nozzles 58, 60, respectively, a situation which if occurred could initiate a foaming reaction within the nozzle lumen that might clog the nozzle. Accordingly, the frequency of nozzle clogging and/or the need for solvent cleaning of the nozzles is reduced in comparison to the prior art dispensers discussed in the Background section above.

In a first embodiment, the divider 40 may then be moved to the divider disengaged position, in which the divider 40 does not isolate the first and second compartments of the bag from each other. (Figure 28.) Similarly, in a second embodiment, the divider 41 may then be moved to the divider disengaged position, in which the divider 41 does not isolate the first and second compartments of the bag from each other. (Figures 30-31.) Consequently, the first and second foam precursors are free to interact and begin the foaming reaction within the mixing chamber 120 of the bag. (Figures 24, 28, 30.)

In a first embodiment, the mixing of the first and second foam precursors within the mixing chamber of the bag may be facilitated by reciprocating movement of the divider to repeatedly engage the mixing chamber of the bag, for example, as the foam reaction begins, in order to provide mixing energy to the first and second precursors within the mixing chamber of the bag to further the mixing of the first and second precursors thereby enhancing the foaming reaction.

In a second embodiment, the mixing of the first and second foam precursors within the mixing chamber of the bag may be facilitated by reciprocating movement of the mixers 43, 45 to repeatedly engage the mixing chamber of the bag, for example, as the foam reaction begins, in order to provide mixing energy to the first and second precursors within the mixing chamber of the bag to further the mixing of the first and second precursors thereby enhancing the foaming reaction.

The first and second mixers 43, 45 are movable from a mixer disengaged position (Figures 29-30) to a mixer engaged position (Figure 31). The first and second mixers 43, 45, and/or rods 250, 252 may be selectively driven forward and backward within base cavity 139 by drive mechanism 148, which may comprise one or more of a motor, actuator, piston, and solenoid, which may be directed by controller 140.

In both embodiments, as the foam reaction progresses, the foam expands within the mixing chamber of the bag. In one embodiment, the foam expands to the point of pushing the base and shell to the base/shell disengaged position, for example, by pushing against a spring force that is biased to normally position the base and shell in the base/shell engaged position. The gasses generated by or resulting from the foaming reaction may control or may also facilitate the expansion of the mixing chamber to push the base and shell to the base/shell disengaged position. In another embodiment, the base and shell may be placed into the base/shell disengaged position by drive mechanisms discussed herein directed for example by the controller, rather than relying solely upon, or partially upon, the foam or reaction gas by-products to place the base and shell in the base/shell disengaged position.

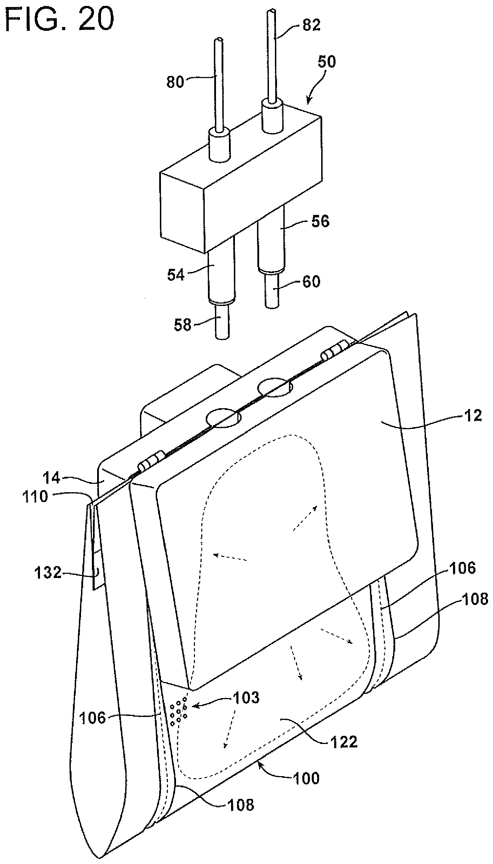

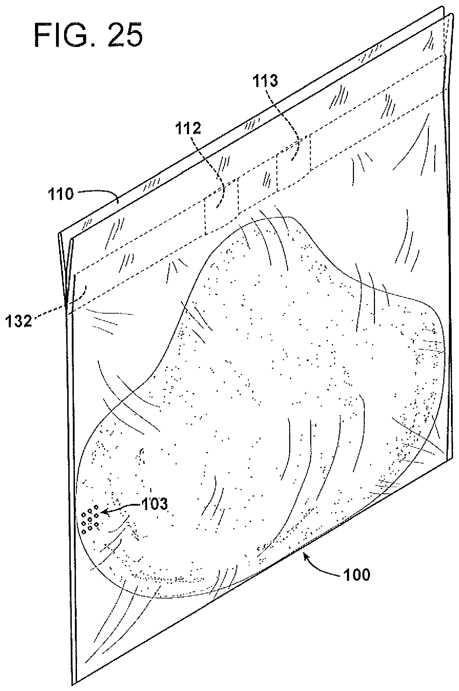

When the base and shell are in the base/shell disengaged position, remaining first and second foam precursors as well as the reacting or expanding foam and reaction by-products may flow into the remainder portion 122 of the bag to complete the reaction. (Figures 20 and 25.) The foaming generated excess gasses may flow from the interior of bag 100 through vent 103 to the exterior of the bag. The vent may be sized and positioned on the bag to minimize contact with expanding foam and thereby reduce the likelihood of foam flow through the vent.

The opposing front left roller 34 and rear left roller 36 and/or the downstream opposing front right roller 30 and rear right roller 32 may cooperate to engage the bag and provide a traction for transmitting a propelling force to the bag. By providing rotational power to drive one or more of the rollers, for example by driving rear left roller 36 or rear right roller 32 or both, then the bag 100 containing the reacted foam may be propelled forward, for example in an indexed manner, to place a subsequent bag from the series of bags in position for filling after the foam has been formed in the previous bag. The bag containing the foam may be detached from the subsequent bag, for example, by tearing the bag along the line of weakening 106.

One or more of the various drive mechanisms described herein may be directed by controller 140. (Figure 32.) The controller may be programmed to direct the operation of machines 10 or 11, for example, by directing any of the drive mechanisms in a desired coordinated and sequenced manner to effect the operation as discussed herein. For example, the controller may direct the placement of base 14 and shell 12 in the base/shell engaged position and/or the base/shell disengaged position by signaling drive mechanism 142 associated with the base and/or shell. The controller may also direct the movement of divider 40 between the divider engaged position and the divider disengaged position by signaling the drive mechanism 144 associated with the divider. Further, if the divider is to be reciprocated to provide mixing energy to the mixing chamber of the bag, then the controller 140 can direct the reciprocating movement of divider 40 by signaling the drive mechanism 144. If the mixing energy is provided by one or more mixers, for example, mixers 43, 45, then the controller 140 may direct the movement of the mixers by signaling the drive mechanism 148 associated with the mixers.

The controller 140 may direct the positioning of the injector assembly 50 in the injector engaged position or the injector retracted position by signaling the drive mechanism 146 associated with the injector assembly, for example, lift 51. The controller 140 may also direct the movement of the pistons 92, 94 by signaling the drive mechanism 152 associated with the foam precursor supply system 90, for example, motor 96. Further, the controller 140 may also direct the movement of one or more of the rollers 30, 32, 34, 36 by signaling the drive mechanisms 150 associated with the rollers.

### Third Embodiment

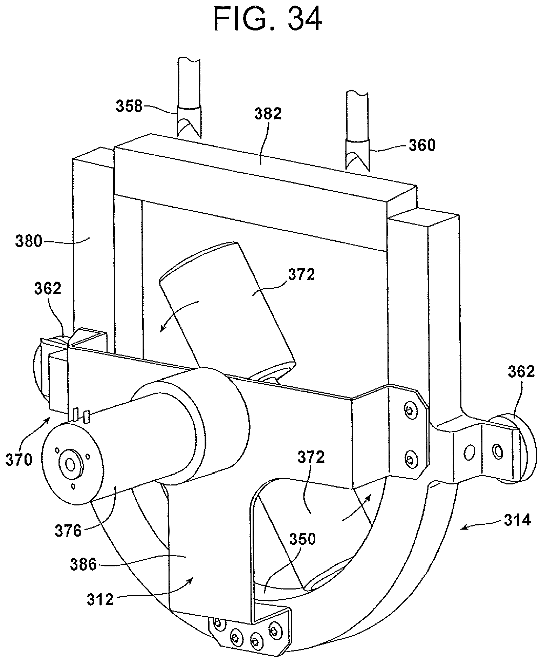

Machine 300 represents a third embodiment of the machine of the present invention for producing foam within a bag, for example, bag 400. (Figure 33.) The description of bag 400 is similar to that of bag 100 described herein, and therefore that description is not repeated here. Machine 300 comprises foam precursor supply system 390. (Figure 33.) The supply system may be supported by base 314. The supply system comprises first foam precursor supply tank 320 and second foam precursor supply tank 322, which are containers suitable for holding a reservoir of first and second foam precursors 72, 74, respectively. (Figure 33.) Supply tanks 320, 322 may comprise a bag-in-box configuration, as described herein. The supply system comprises supply hoses (not visible) connecting each of the supply tanks to its respective first nozzle 358 and second nozzle 360 (Figure 34). Selected or desired amounts of the first and second foam precursors may be transferred through the hoses to the first and second nozzles by use of pistons or pumps (e.g., in-line bellows pump) such as described herein with respect to other embodiments. The pistons or pumps of supply system 390 may be driven by manual energy, for example, utilizing hand lever 352, or may be motor driven for example as described herein with respect to other embodiments. The first and second nozzles 358, 360 may be mounted to or supported by base 314. For example, the first and second nozzles may be fixedly mounted to the base such that in operation they are stationary relative to base 314 (Figure 34), in which case the nozzles are not adapted for movable retraction and insertion as described herein. Alternatively, the first and second injectors may be movably mounted to the base, as described herein with respect to other embodiments.

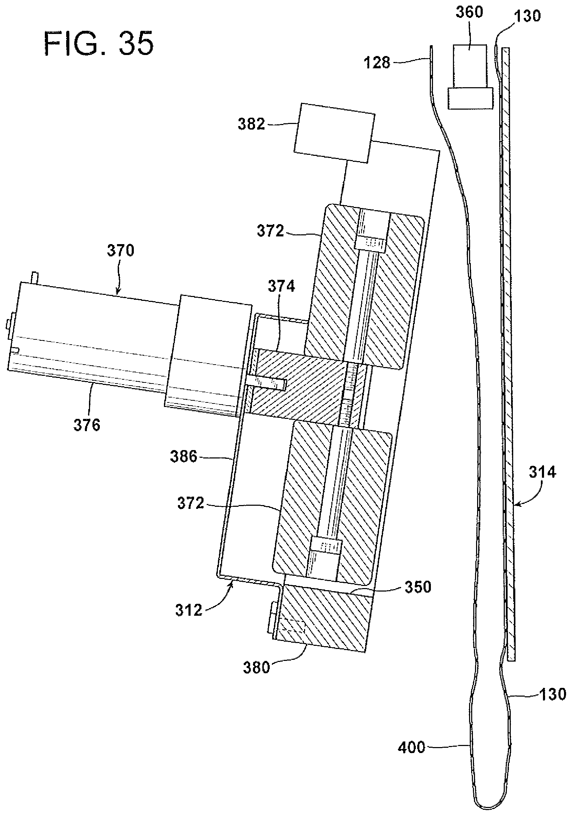

Machine 300 comprises base 314 and shell 312 movable relative to each other between the base/shell engaged position (e.g., Figures 33 and 36-37) and the base/shell disengaged position (e.g., Figures 35 and 38-39). The base and shell are moveable relative each other, for example, by pivoting about a hinge as previously described herein. The base and shell may be movable relative to each other, for example, powered by drive mechanism 142, such as any of a motor, actuator, piston, and solenoid, which may be directed by controller 140. (Figure 32.) Shell 312 may comprise one or more magnets 362, for example attached to shell frame 386 or bottom jaw 380, to facilitate the pressing together of the shell and base in the base/shell engaged position. (Figure 34.)

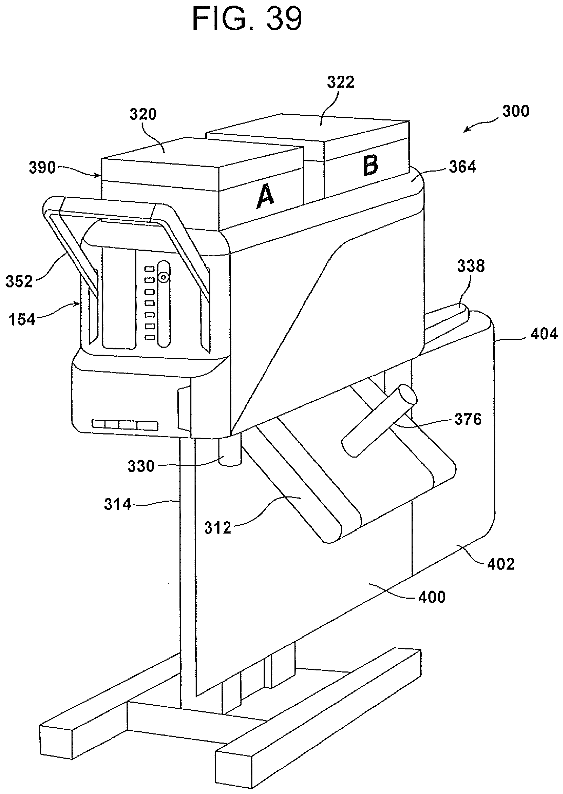

Base 314 may support front right roller 330 and front left roller 334 rotatably mounted to base 314 (Figures 33, 39) with corresponding opposing rollers (not visible) adapted to move bags 400 within machine 300 from roll 404. One or more of the rollers may be selectively driven by a drive mechanism 150, such as a motor, directed by controller 140.

### (Figure 32.)

Shell 312 may comprise bottom jaw 380 and top jaw 382. In the base/shell engaged position, bottom jaw 380 of shell 312 is adapted to press together with the base to hold the bag between the base and bottom jaw 380 to divide the bag into the mixing chamber 320 and the remainder portion 322. The bottom jaw 380 may have a concave curved bottom region 350. (Figure 34.) Bottom jaw 380 may have the letter "U" shape configuration as illustrated for example in Figure 34.

Top jaw 382 is movable relative to bottom jaw 380 to cooperate with the bottom jaw and be adapted to move to a top jaw engaged position (Figure 34, 36-37) cooperating with the bottom jaw 380 to form a peripheral enclosure about the mixing chamber 320 when shell 312 and base 314 are in the base/shell engaged position. (Figure 34.) Top jaw 382 may be capable of extending across the open top of the U-shape configuration of the bottom jaw to form the peripheral enclosure of the mixing chamber, as illustrated. A drive mechanism (not illustrated) may be used to move the top jaw; such drive mechanism may be mounted on frame 386, may comprise one or more of a motor, actuator, piston, and solenoid, and may be directed by controller 140. The top and bottom jaws may have a surface comprising a material to facilitate the isolation of the mixing chamber from the remainder portion when the base and shell are in the base/shell engaged position, for example, one or more relatively resilient materials selected from elastomers, foams, and plastics.

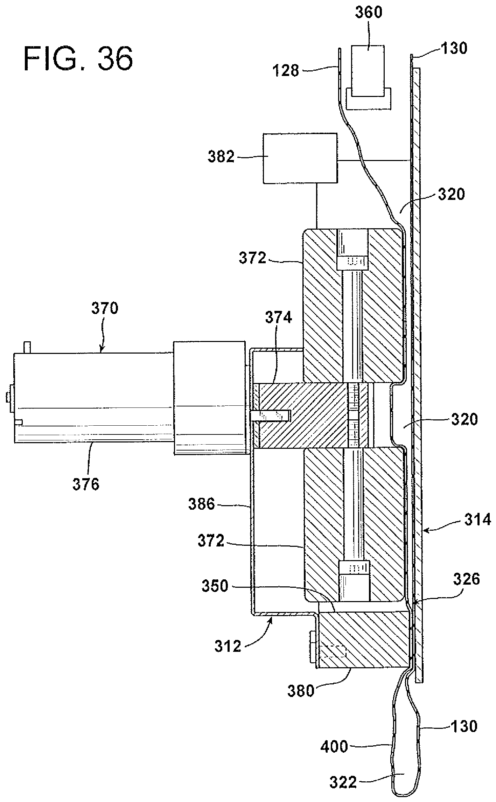

Mixer 370 may be mounted to shell 312, for example mounted to or supported by shell frame 386. The mixer 370 is adapted to rotatively engage the mixing chamber 320 of the bag. Mixer 370 may comprise, for example, one or more mixing rollers 372 adapted to engage the mixing chamber 320. The one or more mixing rollers may comprise relatively resilient materials, such as one or more materials selected from elastomers, foam, and plastics. The one or more mixing rollers 372 may be rotatively attached to drive shaft 374 which is driven by mixing motor 376. Motor 376 may be directed by controller 140. The mixer 370 is adapted to circulate the one or more mixing rollers 372 in a plane generally parallel with the surface of the mixing chamber of the bag. (Figures 36-37.) The term "generally" is used to modify the term "parallel" so that the term parallel is not interpreted in a rigid mathematical sense, but rather to indicate the general orientation of the circulating rollers relative the uneven bag surface of the mixing chamber as the one or more rollers roll along the surface of the bag.

The mixing chamber 320 has bottom region 326 in which the un-reacted and reacting liquid precursors may tend to collect because of gravity effects. Where the bottom jaw 380 has a concave curved bottom region 350, then in the base/shell engaged position the bottom region 326 of the mixing chamber 320 is correspondingly concave curved. The mixer may be adapted to circulate the one or more mixing rollers along a path having a portion corresponding to the concave curved bottom region of he mixing chamber. The mixer can then provide mixing energy to liquid precursors that collect in the concave curved bottom region of the mixing chamber.

Machine 300 may comprise spindle 338 adapted to support roll of bags 404. (Figures 33, 39.) A controller 140 (Figure 32) and/or one or more of the various drive mechanisms discussed herein may be housed in cabinet 364. (Figures 33, 39.) The controller 140 may receive and send the various status, activation, and control signals described herein along various input/output connections and signal transmission lines between the controller 140 and the various sensors and controlled devices described herein. Interface 154 as previously described may provide for human or other interaction or communication with the controller.

In operation of the third embodiment, the series of bags 402 may be installed on spindle 338 so that an open edge or trough of the bag 400 is oriented in the top or upward position. The base 314 and shell 312 are placed in the disengaged position, in which the base and shell are spaced apart to permit insertion of the bag between the base and shell. (Figure 35.) The opposing pairs of rollers may counter-rotate to pull the series of bags from the spindle and between the base and shell. The bag 400 is positioned so that the bag 400 is beneath the first and second nozzles. Additionally, the first and second nozzles 358, 360 may extend within the open top edge of bag 400 between the front and rear sheets 128, 130 of bag 400. (Figure 35.)

The base 314 and shell 312 may be moved relative each other to be placed in the base/shell engaged position in which the shell and base press together to hold the bag 400 between the base and shell to divide the bag 400 into a mixing chamber 320 and a remainder portion 322 such that the mixing chamber 320 is isolated from the remainder portion 322 of the bag. The mixing chamber is beneath the first and second nozzles. (Figures 36-37.) As previously described above, in this context, "isolated" means that the mixing chamber and the remainder portion of the bag are not in liquid communication with each other, such that foam liquid precursor that may be injected or placed into the mixing chamber does not transfer or leak into the remainder portion of the bag. As illustrated in Figure 36, mixing chamber 320 is isolated from remainder portion 322 of the bag -- even though the top of the bag may be open -- because gravity precludes the injected amount of liquid foam precursor from spilling out or over the open top of the engaged U-shaped bottom jaw into the remainder portion of the bag.

The base and shell may be moved relative each other into the base/shell engaged position by spring force provided, for example, at one or more of hinges 16 biased in the base/shell engaged position, and/or by the drive mechanism 142 as described herein.

The supply system is actuated to inject first and second foam precursors though nozzles 258 and 260 into the mixing chamber 320 of the bag. Because the first and second nozzles may be spaced apart from each other, there is minimal chance that the first and second foam precursors would encounter each other within the nozzles 258, 260 to initiate a foaming reaction within either nozzle that might clog the nozzle. Accordingly, the frequency of nozzle clogging and/or the need for solvent cleaning of the nozzles is reduced in comparison to the prior art dispensers discussed in the Background section above.

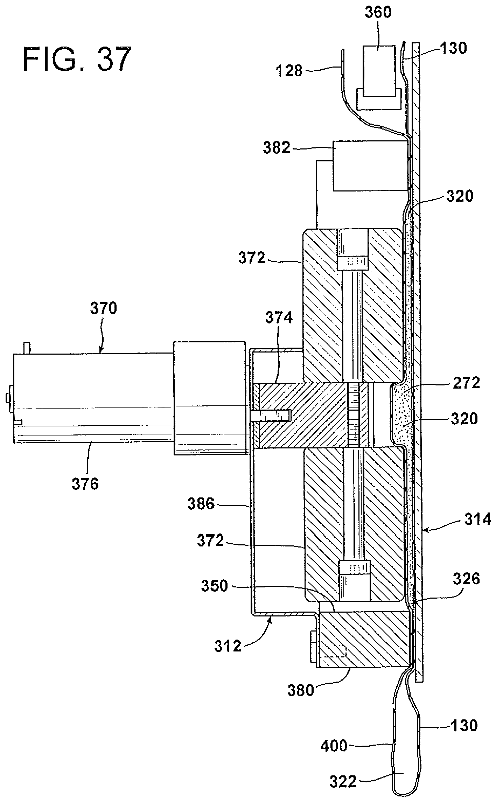

After injecting the liquid foam precursors into the mixing chamber, the top jaw 382 is moved relative to the bottom jaw 380 and base 314 from a top jaw disengaged position (Figures 35-36) to a top jaw engaged position (Figure 37) in which the top jaw 382 and base 314 press together to hold the top portion of bag 400 between the top jaw and base to close the top of the mixing chamber 320, for example, so that shell 312 forms a peripheral enclosure about the mixing chamber, also by way of example, having top jaw 382 extend across the open top of the bottom jaw 380. The top jaw 382 may engage the bag beneath the first and second nozzles, such that the first and second nozzles may remain stationary relative the base, and may not have to be retracted or moved relative the base in order to move the top jaw to the engaged position. That is, the first and second nozzles may be fixedly mounted to the base 314. In such arrangement, bag 400 may not require any one-way valves of the type described herein, but may have an open top edge, as illustrated in Figures 35-38.

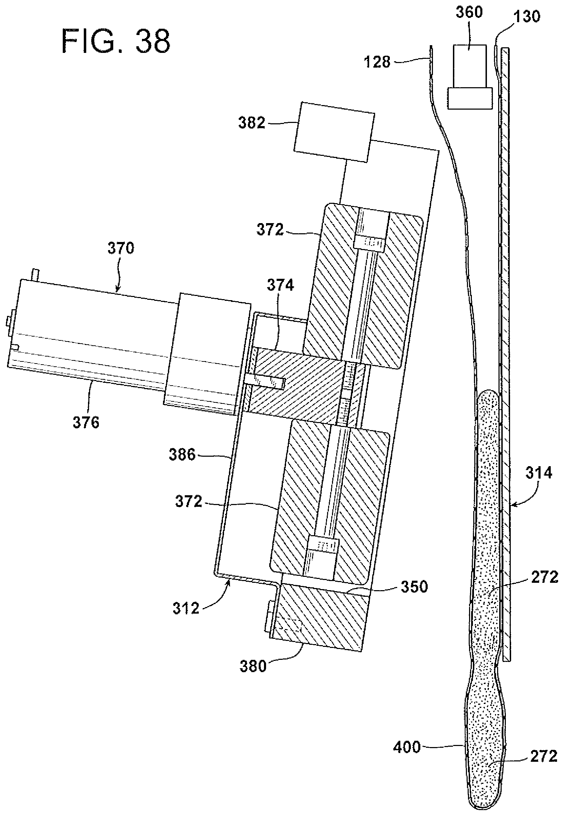

Upon injection of the first and second foam precursors into the mixing chamber 320, the first and second foam precursors are free to interact and begin the foaming reaction within the mixing chamber 320 of the bag. (Figure 37.) The mixing of the first and second foam precursors 272 within the mixing chamber of the bag may be facilitated by the operation of mixer 370. Mixer 370 is movable between a mixer disengaged position (Figures 35, 38) and a mixer engaged position (Figures 36-37). The mixer engaged and disengaged positions may correspond with the base/shell engaged and disengaged positions, respectively, as illustrated in Figures 35-39. In the mixer engaged position, the mixer engages the mixing chamber of the bag. When activated in the engaged position, the mixer provides mixing energy to the first and second precursors 272 within the mixing chamber of the bag to further the mixing of the first and second precursors thereby enhancing the foaming reaction. For example, upon activation of mixing motor 376, drive shaft 374 causes the mixing rollers 372 to rotate about drive shaft 374. In such operation, the one or more mixing rollers 372 circulate in a plane generally parallel to the surface of the mixing chamber 320 of the bag. As the mixing rollers engage the mixing chamber, they roll along the surface of the mixing chamber 320 of bag 400 to provide mixing energy to the precursors within the mixing chamber. The mixer may circulate the one or more mixing rollers along a path having a portion corresponding to the concave curved bottom region 350 of the bottom jaw 380 of shell 312. As such, the outer boundary of the rotational mixing path (e.g., circular rotational path) of the one or more mixing rollers 372 as they circulate about the drive shaft 374 may define a mixing path adjacent bottom region of the mixing chamber. In this configuration, the mixing rollers can engage the mixing chamber where the reacting foam precursors 272 may collect in the bottom region 326 of the mixing chamber 320.

As the foam reaction progresses, the foam expands within the mixing chamber of the bag. The base and shell may be placed into the base/shell disengaged position (e.g., by drive mechanisms discussed herein directed for example by the controller) so that the remaining first and second foam precursors as well as the reacting or expanding foam and reaction by-products (collectively, 272) may flow or fall into the remainder portion 322 of the bag to complete the reaction. (Figure 38.)

The opposing front left roller 334 and rear left roller and/or the downstream opposing front right roller 330 and rear right roller may cooperate to engage the bag and provide a traction for transmitting a propelling force to the bag. By providing rotational power to drive one or more of the rollers, for example by driving rear left roller or rear right roller or both, then the bag 400 containing the reacted foam may be propelled forward, for example in an indexed manner, to place a subsequent bag from the series of bags in position for filling after the foam has been formed in the previous bag. The bag containing the foam may be detached from the subsequent bag, for example, by tearing the bag along the line of weakening.

As previously mentioned, bag 400 may be provided without one-way valves but with the top edge in an open configuration so that the first and second nozzles do not have to align for insertion into the valves of the bag. In any event, the top of the bag may be sealed closed after injection of the foam precursors into the bag, for example, by incorporating a sealing device such as described in U.S. Patent 6,550,229. For example, the heat seal device may comprise a pair of opposing counter-rotating rollers and an electrically conducting heating element that contacts one sheet as the front and rear sheets pass between the rollers to press the heated sheets together to form a longitudinal heat seal across the top of the bag to "close" the bag. Such heat sealing capability may be provided in conjunction, for example, with the opposing right rollers described herein. The heat seal device may be located downline from the injector, for example, downline from the base and shell, for example, to effect the transverse heat seal to close the top edge of the bag after the precursors have been mixed together and expanded into the remainder portion of the bag and, for example, as the bag is propelled forward after the foaming reaction has begun.

### Various Embodiments

The following sentences describe various embodiments not according to the invention.
A. A machine useful for mixing first and second foam precursors to produce foam within a bag, the machine comprising:
   a base and a shell moveable relative each other between:
      (i) a base/shell disengaged position, in which the base and shell are spaced apart to permit insertion of the bag between the base and shell, and
      (ii) a base/shell engaged position in which the shell and base press together to hold the bag between the base and shell and to divide the bag into (1) a mixing chamber and (2) a remainder portion so that the mixing chamber is isolated from the remainder portion of the bag;
   a divider, wherein in the base/shell engaged position the divider is moveable relative to the base and shell between:
      (a) a divider engaged position in which the divider engages the bag to partition the mixing chamber of the bag into first and second compartments that are isolated from each other while the divider is in the engaged position; and
      (b) a divider disengaged position in which the divider does not isolate the first and second compartments from each other;
   a first nozzle adapted to inject the first foam precursor into the first compartment within the bag; and
   a second nozzle adapted to inject the second foam precursor into the second compartment within the bag.
B. The machine described by sentence A wherein the divider is adapted to engage the mixing chamber of the bag to provide mixing energy to the first and second foam precursors within the mixing chamber of the bag when the base and shell are in the base/shell engaged position and the divider is in the disengaged position, thereby facilitating the foam reaction between the first and second foam precursors.
C. The machine described by sentence B wherein the divider is adapted to reciprocatingly engage the mixing chamber of the bag to provide the mixing energy.
D. The machine described by any one of sentences A through C wherein the base defines a cavity in which the divider is moveably received.
E. The machine described by any one of sentences A through D further comprising at least one mixer adapted to engage the mixing chamber of the bag to provide mixing energy to the first and second foam precursors within the mixing chamber of the bag when the base and shell are in the base/shell engaged position and the divider is in the disengaged position, thereby facilitating the foam reaction between the first and second foam precursors.
F. The machine described by sentence E wherein the at least one mixer is adapted to reciprocatingly engage the mixing chamber of the bag to provide the mixing energy.
G. The machine described by any one of sentences E and F wherein the base defines a cavity in which the at least one mixer is moveably received.
H. The machine described by any one of sentences E through G comprising at least two mixers adapted to engage the mixing chamber of the bag to provide mixing energy to the first and second foam precursors within the mixing chamber of the bag when the base and shell are in the base/shell engaged position and the divider is in the disengaged position, thereby facilitating the foam reaction between the first and second foam precursors.
I. The machine described by any one of sentences A through H wherein the divider defines:
   a first concave section adapted to correspond to the first compartment of the partitioned mixing chamber of the bag; and
   a second concave section adapted to correspond to the second compartment of the partitioned mixing chamber of the bag.
J. The machine described by any one of sentences A through I wherein the base defines:
   a first concave section adapted to correspond to the first compartment of the partitioned mixing chamber of the bag; and
   a second concave section adapted to correspond to the second compartment of the partitioned mixing chamber of the bag.
K. The machine described by any one of sentences A through J wherein the shell defines:
   a first concave section adapted to correspond to the first compartment of the partitioned mixing chamber of the bag; and
   a second concave section adapted to correspond to the second compartment of the partitioned mixing chamber of the bag.
L. The machine described by any one of sentences A through K wherein the base defines a roller recess and comprises a roller rotatably mounted at least partially within the base roller recess and adapted to engage the bag.
M. The machine described by any one of sentences A through L wherein the shell defines a roller recess and comprises a roller rotatably mounted at least partially with the shell roller recess and adapted to engage the bag.
N. The machine described by any one of sentences A through K wherein:
   the base defines a roller recess and comprises a roller rotatably mounted at least partially within the base roller recess and adapted to engage the bag;
   the shell defines a roller recess and comprises a roller rotatably mounted at least partially with the shell roller recess and adapted to engage the bag; and
   the roller within the base roller recess and the roller within the shell roller recess oppose each other when the base and shell are in the base/shell engaged position.
O. A method of making a foam-in-bag cushion comprising:
   inserting a bag in the machine described by any one of sentences A through N between the base and shell in the base/shell disengaged position;
   moving the base and shell relative each other to the base/shell engaged position to divide the bag into a mixing chamber and a remainder portion, wherein the mixing chamber is isolated from the remainder portion of the bag;
   moving the divider relative to the base and shell to the divider engaged position to engage the bag and partition the mixing chamber of the bag into first and second compartments that are isolated from each other while the divider is in the engaged position;
   inserting the first nozzle into the bag to inject a first foam precursor into the first compartment within the bag;
   inserting the second nozzle into the bag to inject a second foam precursor into the second compartment within the bag;
   withdrawing the first and second nozzles from the bag; and
   placing the divider into the disengaged position so that the first and second foam precursors may contact each other in the mixing chamber of the bag.
P. The method described by sentence O wherein:
   the bag comprises first and second one-way valves;
   inserting the first nozzle comprises inserting the first nozzle into the first one-way valve to inject a first foam precursor into the first compartment within the bag;
   inserting the second nozzle comprises inserting the second nozzle into the second one-way valve to inject a second foam precursor into the second compartment within the bag; and
   withdrawing the first and second nozzles from the bag comprises withdrawing the first and second nozzles from the first and second one-way valves.
Q. The method described by any one of sentences O and P wherein subsequent to placing the divider in the disengaged position, the base and shell are placed in the base/shell disengaged position, wherein the expanding foam extends into the remainder portion of the bag.
R. The method described by any one of sentences O through Q wherein mixing energy is applied to the first and second foam precursors in the mixing chamber of the bag before the base/shell are placed in the base/shell disengaged position.
S. The method described by sentence R wherein the mixing energy is applied by reciprocating the divider to repeatedly engage the mixing chamber of the bag.
T. The method described by sentence R wherein the mixing energy is applied by at least two mixers that repeatedly engage the mixing chamber of the bag.
U. A machine useful for mixing first and second foam precursors to produce foam within a bag, the machine comprising:
   a base and a shell moveable relative each other between:
      (i) a base/shell disengaged position, in which the base and shell are spaced apart to permit insertion of the bag between the base and shell, and
      (ii) a base/shell engaged position in which the shell and base press together to hold the bag between the base and shell and to divide the bag into (1) a mixing chamber and (2) a remainder portion so that the mixing chamber is isolated from the remainder portion of the bag;
   a first nozzle adapted to inject the first foam precursor into the mixing chamber within the bag;
   a second nozzle adapted to inject the second foam precursor into the mixing chamber within the bag; and
   at least one mixer adapted to engage the mixing chamber of the bag to provide mixing energy to the first and second foam precursors within the mixing chamber of the bag when the base and shell are in the base/shell engaged position, thereby facilitating the foam reaction between the first and second foam precursors.
V. The machine described by sentence U wherein the at least one mixer is adapted to reciprocatingly engage the mixing chamber of the bag to provide the mixing energy.
W. The machine described by any one of sentences U and V wherein the base defines a cavity in which the at least one mixer is moveably received.
X. The machine described by any one of sentences U through W comprising at least two mixers adapted to engage the mixing chamber of the bag to provide mixing energy to the first and second foam precursors within the mixing chamber of the bag when the base and shell are in the base/shell engaged position, thereby facilitating the foam reaction between the first and second foam precursors.
Y. A method of making a foam-in-bag cushion comprising:
   inserting a bag in the machine described by any one of sentences U though W between the base and shell in the base/shell disengaged position;
   moving the base and shell relative each other to the base/shell engaged position to divide the bag into a mixing chamber and a remainder portion, wherein the mixing chamber is isolated from the remainder portion of the bag;
   inserting the first nozzle into the bag to inject a first foam precursor into the mixing chamber within the bag;
   inserting the second nozzle into the bag to inject a second foam precursor into the mixing chamber within the bag;
   withdrawing the first and second nozzles from the bag; and
   moving the mixer to repeatedly engage the mixing chamber of the bag to provide mixing energy to the first and second foam precursors within the mixing chamber.
Z. The method described by sentence Y wherein:
   the bag comprises first and second one-way valves;
   inserting the first nozzle comprises inserting the first nozzle into the first one-way valve to inject a first foam precursor into the mixing chamber within the bag;
   inserting the second nozzle comprises inserting the second nozzle into the second one-way valve to inject a second foam precursor into the mixing chamber within the bag; and
   withdrawing the first and second nozzles from the bag comprises withdrawing the first and second nozzles from the first and second one-way valves.
AA. The method described by any one of sentences Y and Z wherein subsequent to moving the mixer to repeated engage the mixing chamber of the bag, the base and shell are placed in the base/shell disengaged position, wherein the expanding foam extends into the remainder portion of the bag.
BB. The method described by any one of sentences Y through AA wherein mixing energy is applied to the first and second foam precursors in the mixing chamber of the bag before the base/shell are placed in the base/shell disengaged position.
CC. The method described by any one of sentences Y through BB wherein the mixing energy is applied by at least two mixers that repeatedly engage the mixing chamber of the bag.
DD. A machine useful for mixing first and second foam precursors to produce foam within a bag, the machine comprising:
   a base and a shell moveable relative each other between:
      (i) a base/shell disengaged position, in which the base and shell are spaced apart to permit insertion of the bag between the base and shell, and
      (ii) a base/shell engaged position in which the shell and base press together to hold the bag between the base and shell and to divide the bag into (1) a mixing chamber and (2) a remainder portion so that the mixing chamber is isolated from the remainder portion of the bag;
   a first nozzle adapted to inject the first foam precursor into the mixing chamber within the bag;
   a second nozzle adapted to inject the second foam precursor into the mixing chamber within the bag; and
   at least one of either:
      A) a divider, wherein in the base/shell engaged position the divider is moveable relative to the base and shell between:
         (a) a divider engaged position in which the divider engages the bag to partition the mixing chamber of the bag into first and second compartments that are isolated from each other while the divider is in the engaged position, wherein the first nozzle is adapted to inject the first foam precursor into the first compartment within the bag and the second nozzle is adapted to inject the second foam precursor into the second compartment within the bag; and
         (b) a divider disengaged position in which the divider does not isolate the first and second compartments from each other; or
      B) at least one mixer adapted to engage the mixing chamber of the bag to provide mixing energy to the first and second foam precursors within the mixing chamber of the bag when the base and shell are in the base/shell engaged position, thereby facilitating the foam reaction between the first and second foam precursors.
EE. A machine useful for mixing first and second foam precursors to produce foam within a bag, the machine comprising:
   a base and a shell moveable relative each other between:
      (i) a base/shell disengaged position, in which the base and shell are spaced apart to permit insertion of the bag between the base and shell, and
      (ii) a base/shell engaged position in which the shell and base press together to hold the bag between the base and shell and to divide the bag into (1) a mixing chamber and (2) a remainder portion so that the mixing chamber is isolated from the remainder portion of the bag;
   a first nozzle adapted to inject the first foam precursor into the mixing chamber within the bag;
   a second nozzle adapted to inject the second foam precursor into the mixing chamber within the bag; and
   a mixer adapted to engage the mixing chamber of the bag to provide mixing energy to the first and second foam precursors within the mixing chamber of the bag when the base and shell are in the base/shell engaged position, thereby facilitating the foam reaction between the first and second foam precursors.
FF. The machine of sentence EE wherein the shell comprises a bottom jaw such that when the base and shell are in the base/shell engaged position, the bottom jaw is adapted to press together with the base to hold the bag between the base and bottom jaw to divide the bag into the mixing chamber and the remainder portion.
GG. The machine of sentence FF wherein the bottom jaw has a concave curved bottom region.
HH. The machine of any one of sentences FF and GG wherein the bottom jaw has a U-shaped configuration.
II. The machine of any one of sentences FF to HH further comprising a top jaw movable relative the bottom jaw and adapted to move to an engaged position cooperating with the bottom jaw to form a peripheral enclosure about the mixing chamber when the base and shell are in base/shell engaged position.
JJ. The machine of sentence II wherein:
   the bottom jaw has a U-shaped configuration; and
   the top jaw is adapted to extend across the open top of the U-shape configuration of the bottom jaw to form the peripheral enclosure.
KK. The machine of any one of sentences EE to JJ wherein the mixer is adapted to reciprocatingly engage the mixing chamber of the bag to provide the mixing energy.
LL. The machine of any one of sentences EE to KK wherein the mixer is adapted to rotatively engage the mixing chamber of the bag to provide the mixing energy.
MM. The machine of any one of sentences EE to LL wherein the mixer is mounted to the shell.
NN. The machine of any one of sentences EE to MM wherein the mixer comprises one or more mixing rollers adapted to engage the mixing chamber of the bag.
OO. The machine of any one of sentences EE to NN wherein the mixer is adapted to circulate the one or more mixing rollers in a plane generally parallel with the surface of the mixing chamber of the bag.
PP. The machine of any one of sentences NN to OO wherein the one or more mixing rollers are adapted to roll along the surface of the bag.
QQ. The machine of any one of sentences EE to PP wherein the mixing chamber has a bottom region and the mixer is adapted to engage the bottom region of the mixing chamber.
RR. The machine of any one of sentences EE to QQ wherein:
   the shell comprises a bottom jaw such that when the base and shell are in the base/shell engaged position, the bottom jaw is adapted to press together with the base to hold the bag between the base and bottom jaw to divide the bag into the mixing chamber and the remainder portion;
   the bottom jaw has a concave curved bottom region so that in the base/shell engaged position the mixing chamber of the bag has a corresponding concave curved bottom region;
   the mixer comprises one or more mixing rollers adapted to engage the mixing chamber of the bag; and
   the mixer is adapted to circulate the one or more mixing rollers along a path having a portion corresponding to the concaved curved bottom region of the mixing chamber, whereby the mixer is adapted to provide mixing energy to liquids that collect in the concave curved bottom region of the mixing chamber.
SS. The machine of any one of sentences EE to RR wherein the first and second nozzles are fixedly mounted to the base.
TT. A method of making a foam-in-bag cushion comprising:
   inserting a bag in the machine of any one of sentences EE to SS between the base and shell in the base/shell disengaged position and beneath the first and second nozzles;
   moving the base and shell relative each other to the base/shell engaged position to divide the bag into a mixing chamber and a remainder portion, wherein the mixing chamber is isolated from the remainder portion of the bag;
   injecting a first foam precursor from the first nozzle into the mixing chamber within the bag;
   injecting a second foam precursor from the second nozzle into the mixing chamber within the bag; and
   activating the mixer to engage the mixing chamber of the bag to provide mixing energy to the first and second foam precursors within the mixing chamber.
UU. The method of sentence TT further comprising subsequently moving the base and shell to the base/shell disengaged position so that at least a portion of the reacting first and second foam precursors move to the remainder portion of the bag.
VV. A method of making a foam-in-bag cushion comprising:
   inserting a bag in the machine of claim II between the base and shell in the base/shell disengaged position and beneath the first and second nozzles;
   moving the base and shell relative each other to the base/shell engaged position and to hold the bag between the base and bottom jaw to divide the bag into a mixing chamber and a remainder portion, wherein the mixing chamber is isolated from the remainder portion of the bag;
   injecting a first foam precursor from the first nozzle into the mixing chamber within the bag;
   injecting a second foam precursor from the second nozzle into the mixing chamber within the bag;
   subsequently moving the top jaw to an engaged position cooperating with the bottom jaw to form a peripheral enclosure about the mixing chamber; and
   activating the mixer to engage the mixing chamber of the bag to provide mixing energy to the first and second foam precursors within the mixing chamber.
WW. The method of sentence VV further comprising subsequently moving the base and shell to the base/shell disengaged position so that at least a portion of the reacting first and second foam precursors move to the remainder portion of the bag.
XX. The machine of any one of sentences EE to SS further comprising:
   a first tank adapted to supply the first foam precursor to a first bellows pump, wherein the first bellows pump is adapted to pump the first foam precursor to the first nozzle; and
   a second tank adapted to supply the second foam precursor to a second bellows pump, wherein the second bellows pump is adapted to pump the second foam precursor to the second nozzle.
YY. The machine of any one of sentences EE to SS and XX wherein the first and second bellows pumps are adapted for manual operation.
ZZ. The machine of any one of sentences EE to SS and XX to YY wherein the first and second tanks comprise first and second bag-in-box containers, respectively.

The descriptions herein are those of various embodiments of the invention. Various alterations and changes can be made without departing from the aspects of the invention as defined in the appended claims.

## Claims

1. A machine suitable for mixing first and second foam precursors to produce foam within a bag, the machine being adapted to perform a method according to claim 15 and comprising:
a base (14; 214; 314) and a shell (12; 212; 312) moveable relative each other between:
(i) a base/shell disengaged position, in which the base and shell are spaced apart to permit insertion of the bag (100; 400) between the base and shell, and
(ii) a base/shell engaged position in which the shell and base press together to hold the bag between the base and shell and to divide the bag into (I.) a mixing chamber (120; 320) and (II.) a remainder portion (122; 322) so that the mixing chamber is isolated from the remainder portion of the bag;
a first nozzle (58; 358) adapted to inject the first foam precursor into the mixing chamber within the bag;
a second nozzle (60; 360) adapted to inject the second foam precursor into the mixing chamber within the bag; and
a mixer (43, 45; 370) adapted to engage the mixing chamber of the bag to provide mixing energy to the first and second foam precursors within the mixing chamber of the bag when the base and shell are in the base/shell engaged position, thereby facilitating the foam reaction between the first and second foam precursors;
wherein the shell comprises a bottom jaw (380) such that when the base and shell are in the base/shell engaged position, the bottom jaw is adapted to press together with the base to hold the bag between the base and bottom jaw to divide the bag into the mixing chamber and the remainder portion.

2. The machine of claim 1 wherein the bottom jaw (380) has a concave curved bottom region (350).

3. The machine of claim 2 wherein the bottom jaw (380) has a U-shaped configuration.

4. The machine of claim 1 further comprising a top jaw (382) movable relative the bottom jaw (380) and adapted to move to a top jaw engaged position cooperating with the bottom jaw to form a peripheral enclosure about the mixing chamber (320) when the base and shell are in base/shell engaged position.

5. The machine of claim 4 wherein:
the bottom jaw (380) has a U-shaped configuration; and
the top jaw (382) is adapted to extend across the open top of the U-shape configuration of the bottom jaw to form the peripheral enclosure.

6. The machine of claim 1 wherein the mixer (43, 45) is adapted to reciprocatingly engage the mixing chamber of the bag to provide the mixing energy.

7. The machine of claim 1 wherein the mixer (370) is adapted to rotatively engage the mixing chamber of the bag to provide the mixing energy.

8. The machine of claim 1 wherein the mixer is mounted to the shell.

9. The machine of claim 1 wherein the mixer (370) comprises one or more mixing rollers (372) adapted to engage the mixing chamber of the bag.

10. The machine of claim 9 wherein the mixer (370) is adapted to circulate the one or more mixing rollers (372) in a plane generally parallel with the surface of the mixing chamber of the bag.

11. The machine of claim 9 wherein the one or more mixing rollers (372) are adapted to roll along the surface of the bag.

12. The machine of claim 1 wherein the mixing chamber has a bottom region and the mixer is adapted to engage the bottom region of the mixing chamber.

13. The machine of claim 1 wherein:
the shell comprises a bottom jaw such that when the base and shell are in the base/shell engaged position, the bottom jaw is adapted to press together with the base to hold the bag between the base and bottom jaw to divide the bag into the mixing chamber and the remainder portion;
the bottom jaw (380) has a concave curved bottom region (350) so that in the base/shell engaged position the mixing chamber of the bag has a corresponding concave curved bottom region;
the mixer (370) comprises one or more mixing rollers (372) adapted to engage the mixing chamber of the bag; and
the mixer (370) is adapted to circulate the one or more mixing rollers (372) along a path having a portion corresponding to the concaved curved bottom region of the mixing chamber, whereby the mixer is adapted to provide mixing energy to liquids that collect in the concave curved bottom region of the mixing chamber.

14. The machine of claim 1 wherein the first and second nozzles are fixedly mounted to the base.

15. A method of making a foam-in-bag cushion comprising:
inserting a bag in a machine comprising:
a base (14; 214; 314) and a shell (12; 212; 312) moveable relative each other between:
(i) a base/shell disengaged position, in which the base and shell are spaced apart to permit insertion of the bag (100; 400) between the base and shell, and
(ii) a base/shell engaged position in which the shell and base press together to hold the bag between the base and shell and to divide the bag into (I.) a mixing chamber (120; 320) and (II.) a remainder portion (122; 322) so that the mixing chamber is isolated from the remainder portion of the bag;
a first nozzle (58; 358) adapted to inject the first foam precursor into the mixing chamber within the bag;
a second nozzle (60; 360) adapted to inject the second foam precursor into the mixing chamber within the bag; and
a mixer (43, 45; 370) adapted to engage the mixing chamber of the bag to provide mixing energy to the first and second foam precursors within the mixing chamber of the bag when the base and shell are in the base/shell engaged position, thereby facilitating the foam reaction between the first and second foam precursors;
wherein the bag is inserted between the base (14; 214; 314) and shell (12; 212; 312) in the base/shell disengaged position and beneath the first and second nozzles;
moving the base (14; 214; 314) and shell (12; 212; 312) relative each other to the base/shell engaged position to divide the bag into a mixing chamber (120; 320) and a remainder portion (122; 322), wherein the mixing chamber is isolated from the remainder portion of the bag;
injecting a first foam precursor from the first nozzle (56; 358) into the mixing chamber within the bag;
injecting a second foam precursor from the second nozzle (60; 360) into the mixing chamber within the bag; and
activating the mixer (43, 45; 370) to engage the mixing chamber of the bag to provide mixing energy to the first and second foam precursors within the mixing chamber;
subsequently moving the base and shell to the base/shell disengaged position so that at least a portion of the reacting first and second foam precursors move to the remainder portion (122; 322) of the bag.

16. A method according to claim 15, wherein the shell of the machine comprises a bottom jaw (380) such that when the base (14; 214; 314) and shell (12; 212; 312) are in the base/shell engaged position, the bottom jaw (380) is adapted to press together with the base to hold the bag between the base (14; 214; 314) and bottom jaw to divide the bag into the mixing chamber (120; 320) and the remainder portion (122; 322); and a top jaw (382) movable relative the bottom jaw and adapted to move to a top jaw engaged position cooperating with the bottom jaw to form a peripheral enclosure about the mixing chamber when the base and shell are in base/shell engaged position;
wherein in said method:
said moving the base (14; 214; 314) and shell (12; 212; 312) relative each other to the base/shell engaged position involves holding the bag between the base (14; 214; 314) and bottom jaw (380);
after injecting said first and second foam precursors subsequently moving the top jaw (380) to an engaged position cooperating with the bottom jaw to form a peripheral enclosure about the mixing chamber.

## Patentansprüche

1. Maschine, die zum Mischen von ersten und zweiten Schaumvorläufern geeignet ist, um innerhalb eines Beutels Schaum zu erzeugen, wobei die Maschine dazu vorbereitet ist, ein Verfahren gemäß Anspruch 15 auszuführen und aufweist:
eine Basis (14; 214; 314) und eine Schale (12; 212; 312), die relativ zueinander beweglich sind zwischen:
(i) einer Basis/Schale-Öffnungsstellung, in der die Basis und die Schale auf Abstand zueinander sind, um das Einführen des Beutels (100; 400) zwischen die Basis und die Schale zu ermöglichen, und
(ii) einer Basis/Schale-Eingriffsstellung, in der die Schale und die Basis gegeneinander gedrückt sind, um den Beutel zwischen der Basis und der Schale zu halten und um den Beutel in (I.) eine Mischkammer (120; 320) und (II.) einen Restbereich (122; 322) aufzuteilen, so dass die Mischkammer gegenüber dem Restbereich des Beutels isoliert ist,
eine erste Düse (58; 358), die dazu ausgestaltet ist, um den ersten Schaumvorläufer in die Mischkammer innerhalb des Beutels zu injizieren,
eine zweite Düse (60; 360), die dazu ausgestaltet ist, den zweiten Schaumvorläufer in die Mischkammer innerhalb des Beutels zu injizieren, und
einen Mischer (43, 45; 370), der dazu ausgestaltet ist, auf die Mischkammer des Beutels einzuwirken, um den ersten und zweiten Schaumvorläufern innerhalb der Mischkammer des Beutels Mischenergie zuzuführen, wenn die Basis und die Schale in der Basis/Schale-Eingriffsstellung sind, wodurch die Aufschäumreaktion zwischen den ersten und zweiten Schaumvorläufern unterstützt wird,
wobei die Schale eine untere Klemmbacke (30) aufweist, so dass, wenn die Basis und die Schale in der Basis/Schale-Eingriffsstellung sind, die untere Klemmbacke dazu ausgestaltet ist, mit der Basis zusammengedrückt zu werden, um den Beutel zwischen der Basis und der unteren Klemmbacke zu halten, um den Beutel in die Mischkammer und den Restbereich zu unterteilen.

2. Maschine nach Anspruch 1, wobei die untere Klemmbacke (380) einen konkav gekrümmten Bodenbereich (350) hat.

3. Maschine nach Anspruch 2, wobei die untere Klemmbacke (380) eine U-förmige Gestaltung hat.

4. Maschine nach Anspruch 1, die weiter eine obere Klemmbacke (382) aufweist, die relativ zu der unteren Klemmbacke (380) beweglich ist und dazu ausgestaltet ist, sich zu einer Eingriffsstellung der oberen Klemmbacke zu bewegen, in der sie mit der unteren Klemmbacke zusammenwirkt, um eine Umfangseinfassung um die Mischkammer (320) zu bilden, wenn die Basis und die Schale in der Basis/Schale-Eingriffsstellung sind.

5. Maschine nach Anspruch 4, wobei:
die untere Klemmbacke (380) eine U-förmige Gestaltung hat und
die obere Klemmbacke (382) dazu ausgestaltet ist, um sich über das offene obere Ende der U-förmigen Gestaltung der unteren Klemmbacke zu erstrecken, um die Umfangseinfassung zu bilden.

6. Maschine nach Anspruch 1, wobei der Mischer (43, 45) dazu ausgestaltet ist, hin und hergehend auf die Mischkammer des Beutels einzuwirken, um die Mischenergie zuzuführen.

7. Maschine nach Anspruch 1, wobei der Mischer (370) dazu ausgestaltet ist, in drehender Weise auf die Mischkammer des Beutels einzuwirken, um die Mischenergie zuzuführen.

8. Maschine nach Anspruch 1, wobei der Mischer an der Schale angebracht ist.

9. Maschine nach Anspruch 1, wobei der Mischer (370) eine oder mehrere Mischrollen (372) aufweist, die dazu ausgestaltet sind, auf die Mischkammer des Beutels einzuwirken.

10. Maschine nach Anspruch 9, wobei der Mischer (370) dazu ausgestaltet ist, die eine oder mehreren Mischrollen (372) in einer Ebene im Wesentlichen parallel zu der Oberfläche der Mischkammer des Beutels zu drehen.

11. Maschine nach Anspruch 9, wobei die eine oder mehrere Mischrollen (372) dazu ausgestaltet ist, entlang der Oberfläche des Beutels zu rollen.

12. Maschine nach Anspruch 1, wobei die Mischkammer eine Bodenregion hat und der Mischer dazu ausgestaltet ist, um auf die Bodenregion der Mischkammer einzuwirken.

13. Maschine nach Anspruch 1, wobei:
die Schale eine untere Klemmbacke aufweist, so dass, wenn die Basis und die Schale in der Basis/Schale-Eingriffsstellung sind, die untere Klemmbacke dazu ausgestaltet ist, mit der Basis zusammengedrückt zu werden, um den Beutel zwischen der Basis und der unteren Klemmbacke zu halten, um den Beutel in die Mischkammer und den Restbereich aufzuteilen,
die untere Klemmbacke (380) eine konkav gekrümmte untere Region (350) hat, so dass in der Basis/Schale-Eingriffsstellung die Mischkammer des Beutels eine entsprechend konkav gekrümmte Bodenregion hat,
der Mischer (370) eine oder mehrere Mischrollen (372) aufweist, die dazu ausgestaltet sind, um auf die Mischkammer des Beutels einzuwirken, und
der Mischer (370) dazu ausgestaltet ist, die einen oder mehreren Mischrollen (372) sich entlang eines Weges drehen zu lassen, der einen Abschnitt entsprechend der konkav gekrümmten Bodenregion der Mischkammer hat, wodurch der Mischer dazu eingerichtet ist, den Flüssigkeiten, die in der konkav gekrümmten Bodenregion der Mischkammer gesammelt sind, Mischenergie zuzuführen.

14. Maschine nach Anspruch 1, wobei die ersten und zweiten Düsen fest an der Basis montiert sind.

15. Verfahren zum Herstellen eines ausgeschäumten Beutelkissens, bei dem:
ein Beutel in eine Maschine eingeführt wird, die aufweist:
eine Basis (14; 214; 314) und eine Schale (12; 212; 312), die relativ zueinander beweglich sind zwischen:
(i) einer Basis/Schale-Öffnungsstellung, in der die Basis und die Schale auf Abstand zueinander sind, um das Einführen des Beutels (100; 400) zwischen die Basis und die Schale zu ermöglichen, und
(ii) einer Basis/Schale-Eingriffsstellung, in der die Schale und die Basis gegeneinander gedrückt sind, um den Beutel zwischen der Basis und der Schale zu halten und um den Beutel in (I.) eine Mischkammer (120; 320) und (II.) einen Restbereich (122; 322) aufzuteilen, so dass die Mischkammer gegenüber dem Restbereich des Beutels isoliert ist,
eine erste Düse (58; 358), die dazu ausgestaltet ist, um den ersten Schaumvorläufer in die Mischkammer innerhalb des Beutels zu injizieren,
eine zweite Düse (60; 360), die dazu ausgestaltet ist, den zweiten Schaumvorläufer in die Mischkammer innerhalb des Beutels zu injizieren, und
einen Mischer (43, 45; 370), der dazu ausgestaltet ist, auf die Mischkammer des Beutels einzuwirken, um den ersten und zweiten Schaumvorläufern innerhalb der Mischkammer des Beutels Mischenergie zuzuführen, wenn die Basis und die Schale in der Basis/Schale-Eingriffsstellung sind, wodurch die Aufschäumreaktion zwischen den ersten und zweiten Schaumvorläufern unterstützt wird,
wobei der Beutel in der Basis/Schale-Öffnungsstellung zwischen die Basis (14; 214; 314) und die Schale (12; 212; 312) und unter die erste und zweite Düse eingeführt wird, die Basis (14; 214; 314) und die Schale (12; 212; 312) relativ zueinander in die Basis/Schale-Eingriffsstellung bewegt werden, um den Beutel in eine Mischkammer (120; 320) und einen Restbereich (122; 322) zu teilen, wobei die Mischkammer von dem Restbereich des Beutels isoliert ist,
ein erster Schaumvorläufer aus der ersten Düse (56; 358) in die Mischkammer innerhalb des Beutels injiziert wird,
ein zweiter Schaumvorläufer aus der zweiten Düse (60; 360) in die Mischkammer innerhalb des Beutels injiziert wird, und
der Mischer (43, 45; 370) aktiviert wird, um auf die Mischkammer des Beutels einzuwirken, um den ersten und zweiten Schaumvorläufern innerhalb der Mischkammer Mischenergie zuzuführen,
anschließend die Basis und die Schale in die Basis/Schale-Öffnungsstellung bewegt werden, so dass sich wenigstens ein Teil der reagierenden ersten und zweiten Schaumvorläufer in den Restbereich (122; 322) des Beutels bewegt.

16. Verfahren nach Anspruch 15, wobei die Schale der Maschine eine untere Klemmbacke (380), so dass, wenn die Basis (14; 214; 314) und die Schale (12; 212; 312) in der Basis/Schale-Eingriffsstellung sind, die untere Klemmbacke (380) dazu ausgestaltet ist, um gegen die Basis zu drücken, um den Beutel zwischen der Basis (14; 214; 314) und der unteren Klemmbacke zu halten, um den Beutel in die Mischkammer (120; 320) und den Restbereich (122; 322) zu teilen, und eine obere Klemmbacke (382) aufweist, die relativ zu der unteren Klemmbacke beweglich ist und dazu ausgestaltet ist, sich in eine Eingriffsstellung der oberen Klemmbacke in Zusammenwirkung mit der unteren Klemmbacke zu bewegen, um eine Umfangseinfassung um die Mischkammer zu bilden, wenn die Basis und die Schale in der Basis/Schale-Eingriffsstellung sind,
wobei bei dem Verfahren:
die Bewegung der Basis (14; 214; 314) und der Schale (12; 212; 312) relativ zueinander in die Basis/Schale-Eingriffsstellung damit einhergeht, den Beutel zwischen der Basis (14; 214; 314) und der unteren Klemmbacke (380) zu halten,
nach dem Injizieren der ersten und zweiten Schaumvorläufer anschließend die obere Klemmbacke (380) in eine Eingriffsstellung in Zusammenwirkung mit der unteren Klemmbacke bewegt wird, um eine Umfangseinfassung um die Mischkammer zu bilden.

## Revendications

1. Machine convenant pour mélanger des premier et second précurseurs de mousse pour produire de la mousse au sein d'un sac, la machine étant adaptée pour réaliser un procédé selon la revendication 15 et comprenant :
une base (14 ; 214 ; 314) et une coque (12 ; 212 ; 312) mobiles l'une par rapport à l'autre entre :
(i) une position dégagée de base/coque, dans laquelle la base et la coque sont écartées l'une de l'autre pour permettre une insertion du sac (100 ; 400) entre la base et la coque, et
(ii) une position engagée de base/coque, dans laquelle la base et la coque pressent conjointement pour tenir le sac entre la base et la coque et diviser le sac en (I.) une chambre de mélange (120 ; 320) et (II.) une portion restante (122 ; 322) de telle sorte que la chambre de mélange est isolée de la portion restante du sac ;
une première buse (58 ; 358) adaptée pour injecter le premier précurseur de mousse dans la chambre de mélange au sein du sac ;
une seconde buse (60 ; 360) adaptée pour injecter le second précurseur de mousse dans la chambre de mélange au sein du sac ; et
un mélangeur (43, 45 ; 370) adapté pour engager la chambre de mélange du sac pour fournir une énergie de mélange aux premier et second précurseurs de mousse au sein de la chambre de mélange du sac lorsque la base et la coque sont dans la position engagée de base/coque, facilitant de ce fait la réaction de mousse entre les premier et second précurseurs de mousse ;
dans laquelle la coque comprend une mâchoire de dessous (380) de telle sorte que, lorsque la base et la coque sont dans la position engagée de base/coque, la mâchoire de dessous est adaptée pour presser conjointement avec la base pour tenir le sac entre la base et la mâchoire de dessous pour diviser le sac en la chambre de mélange et la portion restante.

2. Machine selon la revendication 1, dans laquelle la mâchoire de dessous (380) a une région de dessous incurvée concave (350).

3. Machine selon la revendication 2, dans laquelle la mâchoire de dessous (380) a une configuration en forme de U.

4. Machine selon la revendication 1, comprenant en outre une mâchoire de dessus (382) mobile par rapport à la mâchoire de dessous (380) et adaptée pour se déplacer vers une position engagée de mâchoire de dessus coopérant avec la mâchoire de dessous pour former une enceinte périphérique autour de la chambre de mélange (320) lorsque la base et la coque sont dans la position engagée de base/coque.

5. Machine selon la revendication 4, dans laquelle :
la mâchoire de dessous (380) a une configuration en forme de U ; et
la mâchoire de dessus (382) est adaptée pour s'étendre à travers le dessus ouvert de la configuration en forme de U de la mâchoire de dessous pour former l'enceinte périphérique.

6. Machine selon la revendication 1, dans laquelle le mélangeur (43, 45) est adapté pour engager en va-et-vient la chambre de mélange du sac pour fournir l'énergie de mélange.

7. Machine selon la revendication 1, dans laquelle le mélangeur (370) est adapté pour engager en rotation la chambre de mélange du sac pour fournir l'énergie de mélange.

8. Machine selon la revendication 1, dans laquelle le mélangeur est monté sur la coque.

9. Machine selon la revendication 1, dans laquelle le mélangeur (370) comprend un ou plusieurs rouleaux de mélange (372) adaptés pour engager la chambre de mélange du sac.

10. Machine selon la revendication 9, dans laquelle le mélangeur (370) est adapté pour faire circuler les un ou plusieurs rouleaux de mélange (372) dans un plan généralement parallèle à la surface de la chambre de mélange du sac.

11. Machine selon la revendication 9, dans laquelle les un ou plusieurs rouleaux de mélange (372) sont adaptés pour rouler le long de la surface du sac.

12. Machine selon la revendication 1, dans laquelle la chambre de mélange a une région de dessous et le mélangeur est adapté pour engager la région de dessous de la chambre de mélange.

13. Machine selon la revendication 1, dans laquelle :
la coque comprend une mâchoire de dessous de telle sorte que, lorsque la base et la coque sont dans la position engagée de base/coque, la mâchoire de dessous est adaptée pour presser conjointement avec la base pour tenir le sac entre la base et la mâchoire de dessous pour diviser le sac en la chambre de mélange et la portion restante ;
la mâchoire de dessous (380) a une région de dessous incurvée concave (350) de telle sorte que dans la position engagée de base/coque la chambre de mélange du sac a une région de dessous incurvée concave correspondante ;
le mélangeur (370) comprend un ou plusieurs rouleaux de mélange (372) adaptés pour engager la chambre de mélange du sac ; et
le mélangeur (370) est adapté pour faire circuler les un ou plusieurs rouleaux de mélange (372) le long d'un chemin ayant une portion correspondant à la région de dessous incurvée concave de la chambre de mélange, moyennant quoi le mélangeur est adapté pour fournir une énergie de mélange à des liquides qui s'accumulent dans la région de dessous incurvée concave de la chambre de mélange.

14. Machine selon la revendication 1, dans laquelle les première et seconde buses sont montées fixement sur la base.

15. Procédé de fabrication d'un coussin de mousse dans un sac, comprenant :
l'insertion d'un sac dans une machine comprenant :
une base (14 ; 214 ; 314) et une coque (12 ; 212 ; 312) mobiles l'une par rapport à l'autre entre :
(i) une position dégagée de base/coque, dans laquelle la base et la coque sont écartées l'une de l'autre pour permettre une insertion du sac (100 ; 400) entre la base et la coque, et
(ii) une position engagée de base/coque, dans laquelle la base et la coque pressent conjointement pour tenir le sac entre la base et la coque et diviser le sac en (I.) une chambre de mélange (120 ; 320) et (II.) une portion restante (122 ; 322) de telle sorte que la chambre de mélange est isolée de la portion restante du sac ;
une première buse (58 ; 358) adaptée pour injecter le premier précurseur de mousse dans la chambre de mélange au sein du sac ;
une seconde buse (60 ; 360) adaptée pour injecter le second précurseur de mousse dans la chambre de mélange au sein du sac ; et
un mélangeur (43, 45 ; 370) adapté pour engager la chambre de mélange du sac pour fournir une énergie de mélange aux premier et second précurseurs de mousse au sein de la chambre de mélange du sac lorsque la base et la coque sont dans la position engagée de base/coque, facilitant de ce fait la réaction de mousse entre les premier et second précurseurs de mousse ;
dans lequel le sac est inséré entre la base (14 ; 214 ; 314) et la coque (12 ; 212 ; 312) dans la position dégagée de base/coque et en dessous des première et seconde buses ;
le déplacement de la base (14 ; 214 ; 314) et de la coque (12 ; 212 ; 312) l'une par rapport à l'autre vers la position engagée de base/coque pour diviser le sac en une chambre de mélange (120 ; 320) et une portion restante (122 ; 322), dans lequel la chambre de mélange est isolée de la portion restante du sac ;
l'injection d'un premier précurseur de mousse depuis la première buse (56 ; 358) dans la chambre de mélange au sein du sac ;
l'injection d'un second précurseur de mousse depuis la seconde buse (60 ; 360) dans la chambre de mélange au sein du sac ; et
l'activation du mélangeur (43, 45 ; 370) pour engager la chambre de mélange du sac pour fournir une énergie de mélange aux premier et second précurseurs de mousse au sein de la chambre de mélange ;
le déplacement ultérieur de la base et de la coque à la position dégagée de base/coque pour qu'au moins une portion des premier et second précurseurs de mousse en réaction se déplace vers la portion restante (122 ; 322) du sac.

16. Procédé selon la revendication 15, dans lequel la coque de la machine comprend une mâchoire de dessous (380) de telle sorte que, lorsque la base (14 ; 214 ; 314) et la coque (12 ; 212 ; 312) sont dans la position engagée de base/coque, la mâchoire de dessous (380) est adaptée pour presser conjointement avec la base pour tenir le sac entre la base (14 ; 214 ; 314) et la mâchoire de dessous pour diviser le sac en la chambre de mélange (120 ; 320) et la portion restante (122 ; 322) ; et une mâchoire de dessus (382) mobile par rapport à la mâchoire de dessous et adaptée pour se déplacer vers une position engagée de mâchoire de dessus coopérant avec la mâchoire de dessous pour former une enceinte périphérique autour de la chambre de mélange lorsque la base et la coque sont dans la position engagée de base/coque ;
dans lequel, dans ledit procédé :
ledit déplacement de la base (14 ; 214 ; 314) et de la coque (12 ; 212 ; 312) l'une par rapport à l'autre dans la position engagée de base/coque implique la tenue du sac entre la base (14 ; 214 ; 314) et la mâchoire de dessous (380) ;
après injection desdits premier et second précurseurs de mousse, le déplacement ultérieur de la mâchoire de dessus (380) vers une position engagée coopérant avec la mâchoire de dessous pour former une enceinte périphérique autour de la chambre de mélange.
